(19) Europäisches Patentamt / European Patent Office / Office européen des brevets

(11) **EP 3 534 566 A2**

(12) **EUROPEAN PATENT APPLICATION**
published in accordance with Art. 153(4) EPC

(43) Date of publication:
04.09.2019 Bulletin 2019/36

(51) Int Cl.:
*H04L 9/32* (2006.01)    *G06F 21/44* (2013.01)
*G06F 21/60* (2013.01)    *G09C 1/00* (2006.01)
*H04L 9/08* (2006.01)

(21) Application number: 17864705.3

(22) Date of filing: 27.10.2017

(86) International application number:
PCT/JP2017/038887

(87) International publication number:
WO 2018/079708 (03.05.2018 Gazette 2018/18)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 27.10.2016 JP 2016210929

(71) Applicant: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(54) **TRANSMISSION/RECEPTION SYSTEM, TRANSMISSION DEVICE, RECEPTION DEVICE, METHOD, AND COMPUTER PROGRAM**

(57)    An authentication technology with far higher safety than the technology using a general one-time password is provided. A client and a server both have the function to sequentially generate the same solutions under the same condition, the solutions being series of characters, numbers, or signs. The client creates a first solution (S1002), encrypts authentication data, which is predetermined data, by using the solution to generate encrypted authentication data (S1003), and sends the encrypted authentication data to the server with identification information, which is a user ID (S1004). The server receives them (S2001), generates a solution (S2002), and encrypts authentication data shared with the client into encrypted authentication data by using the solution (S2003). When the encrypted authentication data generated by the server matches the encrypted authentication data sent from the client, the server authenticates the client to be valid.

FIG. 6

## Description

### Technical field

The present invention relates to communication technologies, and more particularly to authentication technologies.

### Background Art

For example, when checking the balance of one's account, transferring money to a third party, etc., through the Internet banking that makes payment over the Internet to a store existing on the Internet, a user performing these performs communication between his/her terminal (client) and a server of the above-described store, etc. via the Internet. In such communication, it is of course necessary to eliminate wire trapping, falsification, and spoofing by a third party.
In order to do so, authentication technologies are used.
Authentication of the user in the case of using the Internet banking is performed as follows, for example.
When the user uses services of the Internet banking, the user transmits identification information, which is the information specifying the user or specifying a user terminal, from the user terminal, which is the terminal operated by the user, to a server installed by a bank and managed by the bank, via the Internet. This identification information is the combination of a user ID that is set by the bank and a password that is set by the user, although not necessarily limited to this. When the combination of the user ID and the password in the identification information sent from the user terminal to the server is appropriate as recorded on a recording medium of the server, the server authenticates the user or the user terminal that sent the identification information for using the Internet banking as being valid.
However, although the authentication technologies as described above have spread not only for the authentication technologies intended for the Internet banking, but have spread widely, the authentication technologies as described above are becoming classic technologies in the field where the accuracy of authentication should be increased, such as the Internet banking. It is because the combination of a fixed user ID and a fixed password may be stolen by a malicious third party.
In order to reduce such a risk, the bank implements countermeasures, such as prompting the user to change the password on a regular basis, or disable the user from using the Internet banking services if the user does not change the password on a regular basis. However, it is already difficult to eliminate spoofing by a malicious third party by changing the password only once in a several months.
In consideration of such a point, the authentication technology using a one-time password is highly spreading these years.
A one-time password is a time-limited password that is temporarily generated and used. A user generates a one-time password. When generating a one-time password, a user uses a token. Although tokens are distributed to each user by a bank in any case, the tokens are roughly divided into the physical token with substance, and the software token that is installed in a terminal such as a smart phone owned by the user, and makes the terminal function in a manner similar to the physical token. Irrespective of which of the physical token and the software token is used, a token generates a one-time password that becomes valid temporarily (for example, only for one minute since being generated) when a user operates the token. Of course, one-time passwords generated by the tokens distributed to respective users are different from each other.
The user transmits the identification information including the user ID and the one-time password from a user terminal to a server via the Internet.
On the other hand, the server has a function for generating the same one-time password as the one-time password generated by the token distributed to each user. Since the server can generate the same one-time password as the one-time password generated by the token distributed to the user specified by the user ID included in the identification information sent from the user terminal, the server determines whether the one-time password generated by the server is the same as the one-time password sent from the user terminal, and when both match, the server authenticates that the user terminal or the user that sent the one-time password is valid.

### Summary of Invention

### Technical Problem

Although the authentication using such one-time passwords is achieving a certain effect, the cases of spoofing by a malicious third party still never cease. The amount of the illegal remittance in the Internet banking in 2015 disclosed by the National Police Agency is over 3 billion yen, and when taking into consideration that this is the data covering only for the illegal remittance actually identified by the National Police Agency, and is also the data only in Japan, it is not difficult to imagine that the amount of damage is enormous when viewed globally.

One of the reasons for such a thing to occur is that, as in the classic technology that transmits a fixed user ID and a password from a user terminal to a server, also in the technology using a one-time password, every time the user uses services of the Internet banking, the one-time password generated by the user with a token is sent from the user terminal to the server together with the user ID in, for example, the same route.

The algorithm used when generating a one-time password with a token is made to be complicated so that a third party cannot easily detect the algorithm. However, if a malicious third party can obtain a certain number of user IDs exchanged over the Internet, it is at least not impossible to detect the algorithm from those user IDs, and it is considered that such a thing is actually performed.

Such a problem of the authentication using the Internet is naturally a problem also in fields other than the Internet banking.

An object of the present invention is to provide an authentication technology with a higher safety than the technology using a general one-time password.

**Solution to Problem**

In order to achieve this object, the present inventor repeatedly conducted research. As a result, a very simple and essential fact is found out that the above-described problem does not occur if one-time passwords are not transmitted via the Internet.

The present invention is based on such knowledge.

The present invention for achieving the above-described object is as follows.

The present invention roughly includes two inventions, although the inventions are not so different when considered as technical ideas. In the following explanation, the two inventions are respectively referred to as first invention and second invention for convenience.

A first invention of this application is a transmission and reception system including a transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network, and a reception device including reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, and second authentication data encryption means for encrypting the same authentication data as the authentication data predetermined between the reception device and the transmission device and used in the transmission device into encrypted authentication data by using the solution generated by the second solution generation means.

Additionally, the second solution generation means of the reception device is configured to generate at least one solution when the reception means receives the encrypted authentication data transmitted from the transmission device, and the second authentication data encryption means is configured to generate at least one encrypted authentication data from one of the authentication data by using the at least one solution generated by the second solution generation means.

The reception device includes authentication means for authenticating the transmission device that sent the encrypted authentication data to be valid, when one of the encrypted authentication data generated by the second authentication data encryption means matches the encrypted authentication data transmitted from the transmission device.

The transmission and reception system of the first invention is constituted by including the transmission device and the reception device that can communicate with each other via a network (typically, the Internet). Among these transmission device and reception device, the reception device performs authentication processing, and the transmission device asks the transmission device for authentication thereof. In that meaning, the transmission device corresponds to a user terminal in terms of the conventional technology, and the reception device corresponds to a server in terms of the conventional technology. Note that the transmission device in the present application may perform not only transmission but also reception, and the reception device in the present application may perform not only reception but also

3

transmission. The transmission device in the present application means a device that transmits encrypted authentication data for authentication to the other device, and the reception device in the present application means a device that receives the encrypted authentication data for authentication from the other device.

As described above, the transmission device includes first solution recording means for recording an initial solution at least in an initial state, the initial solution being data used for generating a solution, and first solution generation means for generating a new solution based on the initial solution recorded in the first solution recording means, the new solution becoming always the same when generated under the same condition. The new solution that becomes always the same when generated under the same condition based on the initial solution is typically a pseudorandom number having the initial solution dependency. The first solution recording means and the first solution generation means included in the transmission device successively generate solutions by a combination of these. That is, it can be said that these correspond to a token in the conventional technology, more particularly, a software token. On the other hand, the transmission device includes the first authentication data encryption means for encrypting authentication data, the authentication data being predetermined data, shared with the reception device into encrypted authentication data by using the solution generated by the first solution generation means and includes the transmission means for transmitting the encrypted authentication data generated by the first authentication data encryption means via a network.

The reception device includes the second solution recording means for recording the same initial solution as the initial solution recorded in the first solution recording means of the transmission device, and the second solution generation means for generating, based on the initial solution recorded in the second solution recording means, a new solution that is the same as the new solution generated by the first solution generation means of the transmission device, the new solution becoming always the same when using the same initial solution and generated under the same condition. A server in the conventional technology can generate the same one-time password as that generated in a token owned by a user. A combination of the second solution recording means and the second solution generation means in the reception device is similar to means for generating a one-time password in the server of the conventional technology. In order for the reception device to be able to generate the same solution as that generated by the transmission device, in the second solution recording means in the reception device, at least in its initial state (generally, before the first solution is generated), the same initial solution as the initial solution recorded in the first solution recording means of the transmission device at least in its initial state (generally, before the first solution is generated) is recorded, and the second solution generation means in the reception device is configured to be able to generate the same solution as the solution generated by the first solution generation means, when using the same initial solution and generated under the same condition for creating a solution (this "condition" as used in the present application means only the "condition" for an object that naturally affects the generated solution). Such a technology is already known or well known in the generation method of one-time passwords conventionally used, and that can be diverted to the first solution generation means and the second solution generation means.

For example, both the first solution generation means and the second solution generation means may be configured to generate a new solution by the same algorithm. More specifically, the technique for generating a new solution by the first solution generation means and the second solution generation means may be, for example, a technique for obtaining a new solution by substituting a past solution to a predetermined formula so as to obtain a new solution, and then substituting the solution to the same formula. Additionally, both the first solution generation means and the second solution generation means may generate a new solution by substituting the initial solution to a formula that includes the time at the time as a variable. The solution may be a series of at least one of characters, numbers, and signs, and the number of at least one of characters, numbers, and signs included in each solution can be made the same, and to do so is a common practice.

In the present invention, it is not a solution corresponding to a one-time password in the conventional technology that is transmitted from the transmission device to the reception device via the network but is only encrypted authentication data obtained by encrypting authentication data by using the solution. In the present invention, the encrypted authentication data, which is not the solution itself, is transmitted from the transmission device to the reception device instead of the solution and used for authentication performed in the reception device.

The second solution generation means in the reception device is configured to generate at least one solution when the reception means receives the encrypted authentication data transmitted from the transmission device, and the second authentication data encryption means is configured to encrypt authentication data, which the transmission device has, into encrypted authentication data by using the at least one solution. Then, the authentication means of the reception device is configured to authenticate the transmission device that sent the encrypted authentication data to be valid, when one of the encrypted authentication data generated by the second authentication data encryption means matches the encrypted authentication data transmitted from the transmission device. That is, the reception device in the first invention is configured to perform authentication of the transmission device according to whether the same encrypted authentication data as the encrypted authentication data of the transmission device can be generated.

In short, in the transmission and reception system of the first invention, the second solution generation means in the reception device receives the encrypted authentication data from the transmission device, and generates a solution in the same method used by the first solution generation means of the transmission device for generating the solution, when authentication of the transmission device that sent the encrypted authentication data is required. Then, an encrypted authentication data is generated from the authentication data by using the generated solution, and when the encrypted authentication data matches the encrypted authentication data sent from the transmission device, it is determined (authenticated) that the transmission device is valid. In such a procedure of authentication, a solution to be a target of authentication is not transmitted from the transmission device to the reception device not only in a plaintext state but also in an encrypted state. Therefore, such an authentication technology is robust against an attack by a malicious third party.

On the other hand, a second invention is as follows.

The second invention is a transmission and reception system including a transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network and a reception device including reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, and second authentication data decryption means for decrypting the encrypted authentication data received by the reception means to generate the authentication data by using the solution generated by the second solution generation means.

The second solution generation means of this transmission and reception system is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means.

The reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

The transmission and reception system in the second invention is generally the same as the transmission and reception system in the first invention. In particular, the transmission devices of the transmission and reception systems are the same. Like the transmission device in the first invention, the transmission device of the transmission and reception system in the second invention is configured to send the encrypted authentication data to the reception device.

Like the reception device in the first invention, the reception device in the second invention includes the reception means, the second solution recording means, and the second solution generation means that are the same as those included in the reception device in the first invention. However, the reception device in the second invention does not include the second authentication data encryption means included in the reception device in the first invention and includes the second authentication data decryption means instead. The second authentication data decryption means decrypts, by using the solution generated by the second solution generation means, the encrypted authentication data sent from the transmission device. Like the reception device in the first invention, the reception device in the second invention includes the authentication means. However, unlike the case of the first invention, the authentication means in the second invention authenticates the transmission device that sent the encrypted authentication data to be valid, when one of the authentication data generated by the second authentication data decryption means matches the same authentication data as the authentication data predetermined between the reception device and the transmission device and used in the transmission device.

In short, in the transmission and reception system of the second invention, when the reception device receives the encrypted authentication data from the transmission device and authentication of the transmission device that sent the encrypted authentication data is necessary, the second solution generation means in the reception device generates a solution according to the same method as a method with which the first solution generation means of the transmission device generates the solution. The reception device decrypts the encrypted authentication data received from the transmission device to generate authentication data by using the generated solution and, when one of the authentication data matches authentication data shared with the transmission device and originally stored by the reception device, determines (authenticates) the transmission device to be valid. In such a procedure of authentication, a solution to be a target of authentication is not transmitted from the transmission device to the reception device not only in a plaintext state but also in an encrypted state. Therefore, such an authentication technology is robust against an attack by a malicious third party.

In the transmission and reception system of the second invention, the reception device attempts decryption of encrypted authentication data sent from the transmission device and, if the decryption is possible, authenticates the transmission device to be valid. On the other hand, in the first invention, the reception device attempts the same encryption as the encryption in the transmission device and, if the encryption is possible, authenticates the transmission device to be valid. The second invention is different from the first invention at this point.

It is common in the first invention and the second invention that the number of solutions generated by the second solution generation means for authentication of the transmission device may be one, or may be plural.

Both the first solution generation means and the second solution generation means may generate by substituting the initial solution to a formula that includes the time at the time as a variable. This corresponds to the case where the generation method of a solution adopted by the first solution generation means of the transmission device and the second solution generation means of the reception device adopts the so-called time synchronization, which is known as the generation method of a one-time password. In this case, the solution generated by the first solution generation means should be the same as the solution generated by the second solution generation means. Accordingly, the number of the solution generated by the second solution can be set one, the authentication means of the reception device can perform the above-described authentication by using only one solution generated by the second solution generation means.

On the other hand, the technique for generating a new solution by the first solution generation means and the second solution generation means may be, for example, a technique for obtaining a new solution by substituting a past solution to a predetermined formula so as to obtain a new solution, and then substituting the new solution to the same formula. This corresponds to the case where the generation method of a solution adopted by the first solution generation means of the transmission device and the second solution generation means of the reception device adopts the so-called event synchronization, which is known as the generation method of a one-time password. In the case where the event synchronization is adopted, the solution generated by the first solution generation means and the solution generated by the second solution generation means become the same, when the solutions that are generated in the same order are compared with each other. For example, when the solution was generated three times in the past by the first solution generation means, the number of the solutions generated in the past, i.e., "3" can be counted and recorded, the first solution generation means can generate the solution for the number of times obtained by adding "+1" to the number "3", i.e., four times, based on the initial solution, and encrypted authentication data generated from the fourth solution can be sent to the reception device. When the first solution generation means generates the fourth solution as described above, "3", which is the number of the solutions generated in the past may be also recorded in the second solution generation means of the reception device. In this case, the second solution generation means of the reception device generates the fourth solution as in the first solution generation means. Consequently, the second solution generation means of the reception device can generate, in a synchronized state with the first solution generation means, the same solution as the solution generated by the first solution generation means of the transmission device. In the case of the first invention, the authentication data shared with the transmission device is encrypted by the second authentication data encryption means by using the solution generated by the second solution generation means. The encrypted authentication data obtained as a result of the encryption is compared by the authentication means with the encrypted authentication data sent from the transmission device. On the other hand, in the case of the second invention, the encrypted authentication data sent from the transmission device is decrypted by the second authentication data decryption means by using the solution generated by the second solution generation means. The authentication data obtained as a result of the decryption is compared by the authentication means with the authentication data shared with the transmission device. In both the cases of the first invention and the second invention, the solution generated by the first solution generation means of the transmission device and the solution generated by the second solution generation means of the reception device are the same and the authentication data are the same. Therefore, two data to be targets of comparison in the authentication means should match. This is called a first method for event synchronization.

When adopting the event synchronization, there is also a method of not recording the number of solutions generated in the past as described above. For example, suppose a solution is X, and the algorithm of generating the next solution by the function $X_{n+1} = f(X_n)$ is adopted by the first solution generation means and the second solution generation means. In this case, both the first solution generation means and the second solution generation means can hold the solution made immediately before, and can maintain the state where all of the solutions generated before that are deleted. On this occasion, when the first solution generation means and the second solution generation means generate the fourth solution, the fourth solution can be generated by substituting $X_3$, which is the third solution that is held, to the formula $X_{n+1} = f(X_n)$, such as $X_4 = f(X_3)$. Also in this case, the solution generated by the reception device and the solution generated by the transmission device should match with each other. Further, for example, when the formula like $X_{n+1} = f(X_n) + f(X_{n-1})$ is used by using a plurality of solutions in the past, the solutions to be held by the first solution generation means and the second solution generation means are the two solutions used immediately before that. In this manner, the number of solutions to be held by the first solution generation means and the second solution generation means is not necessarily one. This is called a second method for event synchronization.

When adopting the event synchronization, a further different method can be adopted. For example, suppose the algorithm of generating the next solution by using the above-described function is adopted by the first solution generation means and the second solution generation means. In this case, it is assumed that the partial solution generated by the first solution generation means is also used for authentication by the other devices other than the reception device. In such a case, for example, in the case of the first invention, it is assumed that authentication is performed by the reception device by using the encrypted authentication data encrypted by using the third solution generated in the past by the first solution generation means, and the encrypted authentication data encrypted by using the third solution generated by the second solution generation means, and thereafter, the fourth and fifth solutions created by the first solution generation means are used by the other devices other than the reception device when performing authentication. In such a case, even if the first method for event synchronization is used, or the second method for event synchronization is used, authentication cannot be performed. This is because, according to the first method for event synchronization, since the numbers of the solutions generated in the past and recorded in the first solution generation means and the second solution generation means are different from each other, the solutions generated by the first solution generation means and the solutions generated by the second solution generation means are different from each other, processing of encryption performed by the first authentication data encryption means of the transmission device by using the solution generated by the first solution generation means and processing of encryption performed by the second authentication data encryption means of the reception device by using the solution generated by the second solution generation means are different from each other, and, therefore, two encrypted authentication data compared by the authentication means are different from each other. Similarly, according to the second method for event synchronization, since the solution held by the first solution generation means is different from the solution held by the second solution generation means, the solution generated by the first solution generation means and the solution generated by the second solution generation means become different from each other, and as a result, the respective solutions generated by the first solution generation means and the second solution generation means become different from each other, and, therefore, two encrypted authentication data compared by the authentication means are different from each other. Such a situation is the same in the case of the second invention. In the case of the second invention, the reception device cannot decrypt the encrypted authentication data sent from the transmission device.

In such a case, a plurality of solutions may be generated by the second solution generation means. For example, when the second solution generation means generated three solutions in the past, the second solution generation means can generate the solution after the fourth solution, irrespective of whether the first method or second method for event synchronization is used. For example, suppose the second solution generation means is configured to generate ten solutions. In the case of the first invention, the second authentication data encryption means of the reception device encrypts the same authentication data ten times respectively by using the ten solutions and generates ten encrypted authentication data. In this case, since the sixth solution generated by the second solution generation means will match the solution (the sixth solution) generated by the first solution generation means, the sixth encrypted authentication data generated by the reception device will match the encrypted authentication data sent from the transmission device. When one of the plurality of encrypted authentication data created by the reception device matches the encrypted authentication data sent from the transmission device, the authentication means authenticates the transmission device that sent the encrypted authentication data to be valid. In this manner, when a plurality of solutions are generated by the second solution generation means of the reception device, even if the solution generated by the first solution generation means is different from the solution generated by the second solution generation means (even if there is an inconsistency in the order in which the solutions serving as the points for synchronization in the event synchronization are generated), it is possible to perform authentication. However, when adopting this method, it seems that the upper limit for the number of solutions generated by the reception device should be on the order of, for example, 1000 or 10000. Accordingly, when such an authentication method is temporarily called the third method for event synchronization, and when the third method for event synchronization is adopted, even if such a huge number of solutions are created, it will be necessary to increase the number of digits of the solution to such an extent that guarantees some degree of accuracy of the authentication by the solution. Additionally, in the above description, it is assumed that a lot of solutions are generated by the second solution generation means, then a lot of encrypted authentication data are generated by the second authentication data encryption means by using a lot of the solutions generated by the second solution generation means, then a lot of the encrypted authentication data are compared with the encrypted authentication data sent from the transmission device, and when one of the former matches the latter, authentication is performed. However, instead of this, it is also possible to change the order of processing, such as after the first solution (the fourth solution in the above-described description) is generated by the second solution generation means, before generating the second solution by the second solution generation means, an encrypted authentication data is generated by using the solution, the encrypted authentication data is compared with the encrypted authentication data sent from the transmission device, and when both do not match, the above processing is repeated, when both match, authentication is performed by the authentication means, and eventually, when all of the encrypted authentication data generated by using all of the solutions generated by the second solution generation means do not match the encrypted authentication data sent from the transmission device, authentication is not performed. When such processing like batch processing is adopted, it is also possible to abort the generation of solutions by the second solution generation means, when authentication is performed by the authentication means.

In the second invention of this application as well, the third method of event synchronization can be adopted.

As described above, in the case of the first invention, or in the case of the second invention, the transmission and reception system of the present application is constituted by the combination of the transmission device and the reception device. Although the transmission device and the reception device form a pair relationship when performing authentication, each of the number of the transmission devices and the number of the reception devices that are included in the transmission and reception system does not necessarily need to be one. Rather, when this transmission and reception system is applied to the Internet banking, etc., there will be many cases where the number of the reception devices is one, and there are a lot of transmission devices rather than multiple transmission devices.

The following description of this paragraph is common to the case of the first invention and the case of the second invention.

In the case where there are a plurality of transmission devices, the transmission device may be configured to send the identification information to the reception device when the encrypted authentication data is sent from the transmission device to the reception device. For example, the identification information may be input by the user to the transmission device by an input device included in the transmission device, and the input identification information can be sent from the transmission device to the reception device. In that case, the second solution recording means may record the same initial solution as the initial solution recorded in the first solution recording means of the transmission device to which the identification information is assigned at least in the initial state, in association with the identification information assigned to each of the transmission device. Accordingly, in the case where the reception means receives the encrypted authentication data transmitted from the transmission device, when the second solution generation means generates a new solution, the second solution generation means may be configured to generate a solution based on, among initial solutions recorded in the second solution recording means, the initial solution recorded in the second solution recording means in a state where the initial solution is associated with the solution corresponding to the identification information sent from the transmission device with the encrypted authentication data that becomes a trigger for generating the new solution.

Where there are a plurality of transmission devices, a solution is generated by each of the transmission devices. A plurality of solutions may be generated by each of the transmission devices as needed. Of course, it is assumed that the sequences of solutions generated by the respective plurality of transmission devices are different from each other. Accordingly, when encrypted authentication data is sent from a certain transmission device, the reception device must recognize which user sent the encrypted authentication data, in other words, for which user a solution must be generated from now. As described above, when the identification information is sent from the transmission device to the reception device in addition to the encrypted authentication data, the reception device can recognize which user sent the encrypted authentication data, or for which user a solution must be generated from now. The second solution generation means of the reception device generates a solution based on, among initial solutions recorded in the second solution recording means, the initial solution recorded in the second solution recording means in the state where the initial solution is associated with the solution corresponding to the identification information sent from the transmission device with the encrypted authentication data that becomes a trigger for generating the new solution.

Note that the encrypted authentication data and the identification information do not need to be sent at the same time from the transmission device to the reception device, and as long as it is obvious that they are associated with each other, they may be sent separately from each other.

The following description of this paragraph is common to the case of the first invention and the case of the second invention.

Authentication data used in the transmission device and authentication data used in the reception device may change with elapse of time according to a rule between the transmission device and the reception device.

In the transmission and reception system of the present invention, the transmission device and the reception device need to share the same authentication data. Such authentication data may be fixed and not change or may change with elapse of time as described above. Such a change of the authentication data needs to be synchronized in the transmission device and the reception device. For example, a method of causing the first solution generation means and the second solution generation means to generate synchronized solutions can be applied to this. Alternatively, information acquirable even in a remote point such as time of that point in time, weather, temperature, and the like of a certain point at certain time, and an immediately preceding result of a game of certain sports can be diverted as the authentication data. If the authentication data is changed, accuracy or intensity of authentication in the transmission and reception system naturally further increases.

In the case of the first invention, or in the case of the second invention, the transmission and reception system of the present application may be further configured to perform encrypted communication between the transmission device and the reception device via a network such as the Internet.

The following description of this paragraph is common to the case of the first invention and the case of the second invention.

The transmission device may include first encryption decryption means capable of performing at least one of encryption processing or decryption processing, and the first encryption decryption means may be configured to encrypt plaintext data to be transmitted, by using the solution generated by the first solution generation means after the authentication is performed by the reception device, or to decrypt encrypted data transmitted from the reception device to convert the encrypted data into plaintext data, by using the solution generated by the first solution generation means after the authentication is performed by the reception device. In this case, the reception device may include second encryption decryption means capable of performing at least one of encryption processing or decryption processing, and the second encryption decryption means may be configured to encrypt plaintext data to be transmitted, by using the same solution as the solution used by the first encryption decryption means (or, a synchronized solution) among solutions generated by the second solution generation means after the authentication is performed by the reception device, or to decrypt encrypted data transmitted from the transmission device to convert the encrypted data into plaintext data, by using the same solution as the solution used by the first encryption decryption means among solutions generated by the second solution generation means after the authentication is performed by the reception device.

In this case, the transmission device and the reception device are configured to perform at least one of processing of transmitting encrypted data encrypted by the first encryption decryption means from the transmission device to the reception device, and decrypting the encrypted data by the second encryption decryption means, and processing of transmitting encrypted data encrypted by the second encryption decryption means from the reception device to the transmission device, and decrypting the encrypted data by the first encryption decryption means.

As described above, this transmission and reception system performs authentication by using the encrypted authentication data that is generated based on the same solution that can be generated (in a synchronized state) by both the transmission device and the reception device that are included in the transmission and reception system, and that is transmitted from the transmission device to the reception device.

Although it can be said that this transmission and reception system is excellent for that fact alone, this transmission and reception system can be further excellent by causing this transmission and reception system to perform encrypted communication. As described above, in this transmission and reception system, the transmission device and the reception device can generate the same solution. Accordingly, the present inventor has found that it is possible to solve the key delivery problem, which has been a pending matter for years in the field of encrypted communication.

In the field of encrypted communication, it is the standard that a sender and a recipient have the same key (that is, perform the common key system communication), and it has been a problem since a long time ago how to share the same key. This is the above-described key delivery problem. Although the secret key system also exists in the encrypted communication, as a matter of fact, the secret key system can be used only for the sender and the recipient to have the same common key due to its processing load, as in the SSL communication, for example.

Meanwhile, in the transmission and reception system of the present application, the transmission device and the reception device can generate the same solutions in a synchronized state. By using the solutions as, for example, keys for performing encryption and decryption by the transmission device and the reception device, the key delivery problem can be solved. Further, the solutions used in this case are generated by the first solution generation means and the second solution generation means, respectively, after authentication is performed. That is, in this transmission and reception system, it is possible to use the solutions that are generated in the transmission device and the reception device, respectively, and are not transmitted and received via a network for encryption and decryption. It is obvious that such encrypted communication is safe.

Further, it does not matter how the first encryption decryption means and the second encryption decryption means in the transmission and reception system in the present application use the solutions when performing encryption and decryption. The solutions can be used as the keys as described above, and the algorithm can be changed based on the solutions.

In order for the first solution generation means and the second solution generation means to be able to generate the same solution by the so-called time synchronization after authentication is performed, a rule may exist between a transmitting-side device or the first solution generation means and a receiving-side device or the second solution generation means that a solution generated when how long time is designated after or before time when the solution used for the authentication (accurately, in the case of the first invention, the solution used for generating the encrypted authentication data used for the authentication (for encrypting the authentication data) and, in the case of the second invention, the solution used for generating the authentication data used for the authentication (for decrypting the encrypted authentication data) is generated) is "used in common as the solution, after authentication is performed". For example, when the transmitting-side device or the first solution generation means, and the receiving-side device or the second solution generation means make a rule in advance that the solution generated at the time corresponding to five minutes after the time at which the solution used for authentication is generated is used for at least one of encryption and decryption, if it is after the authentication, even if five minutes have not passed after the authentication, the first solution generation means and the second solution generation means can generate the same solution.

On the other hand, when the so-called event synchronization is adopted, since the solutions generated by the first solution generation means and the second solution generation means next to the solutions used for authentication are the same, a rule such as that in the time synchronization is not particularly required. Naturally, the solution used for encrypted communication does not need to be the solution generated following the solution used for the authentication and can be, for example, a solution generated after three solutions used for the authentication.

The present inventor also proposes the transmission device of the transmission and reception system of the first invention as described above as one aspect of the first invention of this application. Its effect is equal to the effect of the above-described transmission and reception system of the first invention.

An example of the transmission device in that case is a transmission device constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

Additionally, the reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means.

The second solution generation means is configured to generate at least one solution when the reception means receives the encrypted authentication data transmitted from the transmission device, the second authentication data encryption means is configured to generate at least one of the encrypted authentication data from one of the authentication data by using the at least one solution generated by the second solution generation means, and the reception device includes authentication means for authenticating the transmission device that sent the encrypted authentication data to be valid, when one of the encrypted authentication data generated by the second authentication data encryption means matches the encrypted authentication data transmitted from the transmission device.

The present inventor also proposes the transmission device of the transmission and reception system described above as one aspect of the second invention of this application. Its effect is equal to the effect of the above-described transmission and reception system according to the second invention.

An example of the transmission device in that case is a transmission device constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

A reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, and second authentication data decryption means for decrypting the encrypted authentication data received by the reception means by using the solution generated by the second solution generation means to generate the authentication data.

The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, and the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

The present inventor also proposes the reception device of the transmission and reception system described above as one aspect of the present invention. Its effect is equal to the effect of the above-described transmission and reception system according to the first invention.

An example of the reception device in that case is a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, and second authentication data encryption means for encrypting the same authentication data as the authentication data predetermined between the reception device and the transmission device and used in the transmission device into encrypted authentication data by using the solution generated by the second solution generation means. The second solution generation means is configured to generate at least one solution when the reception means receives the encrypted authentication data transmitted from the transmission device, the second authentication data encryption means is configured to generate at least one of the encrypted authentication data from one of the authentication data by using the at least one solution generated by the second solution generation means, and the reception device includes authentication means for authenticating the transmission device that sent the encrypted authentication data to be valid, when one of the encrypted authentication data generated by the second authentication data encryption means matches the encrypted authentication data transmitted from the transmission device.

The present inventor also proposes the reception device of the transmission and reception system of the second invention described above as one aspect of the second invention of this application. Its effect is equal to the effect of the above-described transmission and reception system according to the second invention.

An example of the reception device in that case is a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

This reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, and second authentication data decryption means for decrypting the encrypted authentication data received by the reception means to generate the authentication data by using the solution generated by the second solution generation means. The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, and the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

The first invention can also be understood as a method performed in the transmission device. The effect of such a method is the same as that of the transmission device of the first invention.

The method is, for example, a method performed in a computer of the transmission device, the transmission device including the computer and constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs.

Additionally, this method includes the processes performed by the computer, the processes including a process of generating a new solution based on the initial solution recorded in the first solution recording means, the new solution becoming always the same when generated under the same condition, a process of encrypting authentication data, the authentication data being predetermined data, into encrypted authentication data by using the generated solution, and a process of transmitting the generated encrypted authentication data via a network,

The reception device used in this method includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the computer of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means. The second solution generation means is configured to generate at least one solution when the reception means receives the encrypted authentication data transmitted from the transmission device, the second authentication data encryption means is configured to generate at least one of the encrypted authentication data from one of the authentication data by using the at least one solution generated by the second solution generation means, and the reception device includes authentication means for authenticating the transmission device that sent the encrypted authentication data to be valid, when one of the encrypted authentication data generated by the second authentication data encryption means matches the encrypted authentication data transmitted from the transmission device.

The second invention can also be understood as a method performed in the transmission device. The effect of such a method is the same as that of the transmission device of the second invention.

The method is, for example, a method performed in a computer of the transmission device, the transmission device including the computer and constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs.

This method includes the processes performed by the computer, the processes including a process of generating a new solution based on the initial solution recorded in the first solution recording means, the new solution becoming always the same when generated under the same condition, a process of encrypting authentication data, the authentication data being predetermined data, into encrypted authentication data by using the generated solution, and a process of transmitting the generated encrypted authentication data via a network.

The reception device used in this method includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the computer of the transmission device, the new solution becoming always the same when using the same initial solution and generated under the same condition, and second authentication data decryption means for decrypting the encrypted authentication data received by the reception means to generate the authentication data by using the solution generated by the second solution generation means. The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, and the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

The first invention can also be understood as a method performed in the reception device. The effect of such a method is the same as that of the reception device of the first invention.

The method is, for example, a method performed in a computer of the reception device, the reception device including the computer and constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmitting means for transmitting the encrypted authentication data generated by the first authentication data encryption means via a network, the computer including second solution recording means for recording the same initial solution as the initial solution recorded in the first solution recording means of the transmission device at least in an initial state.

This method includes the processes performed by the computer, the processes including a process of receiving, via the network, the encrypted authentication data transmitted from the transmission device, a process of generating, based on the initial solution recorded in the second solution recording means, a new solution that is the same as the new solution generated by the first solution generation means of the transmission device, the new solution becoming always the same when using the same initial solution and generated under the same condition, and a process of encrypting the same authentication data as the authentication data predetermined between the reception device and the transmission device and used in the transmission device into encrypted authentication data by using the generated solution. The computer performs the process of generating the new solution as a process of generating at least one solution when the reception device receives the encrypted authentication data transmitted from the transmission device, performs the process of generating the encrypted authentication data as a process of encrypting the same authentication data as the authentication data predetermined between the reception device and the transmission device and used in the transmission device into at least one encrypted authentication data by using the generated at least one solution, and authenticates the transmission device that sent the encrypted authentication data to be valid, when one of the generated encrypted authentication data matches the encrypted authentication data transmitted from the transmission device.

The second invention can also be understood as a method performed in the reception device. The effect of such a method is the same as that of the reception device of the second invention.

The method is, for example, a method performed in a computer of the reception device, the reception device including the computer and constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network, the computer including second solution recording means for recording the same initial solution as the initial solution recorded in the first solution recording means of the transmission device at least in an initial state.

This method includes the processes performed by the computer, the processes including a process of receiving, via the network, the encrypted authentication data transmitted from the transmission device, a process of generating, based on the initial solution recorded in the second solution recording means, a new solution that is the same as the new solution generated by the first solution generation means of the transmission device, the new solution becoming always the same when using the same initial solution and generated under the same condition, and a process of decrypting the received encrypted authentication data to generate the authentication data by using the generated solution. The computer performs the process of generating the new solution as a process of generating at least one solution when the reception device receives the encrypted authentication data transmitted from the transmission device, performs the process of generating the encrypted authentication data as a process of decrypting one of the encrypted authentication data to generate at least one of the authentication data by using the generated at least one solution, and authenticates the transmission device that sent the encrypted authentication data to be valid, when one of the generated authentication data matches the same authentication data as the authentication data predetermined between the reception device and the transmission device and used in the transmission device.

The present inventor also proposes, as one aspect of the first invention of this application, a computer program for causing a computer, for example, a general-purpose computer, to function as the transmission device of the transmission and reception system of the first invention as described above.

An example of the computer program in that case is a computer program for causing a computer to function as the transmission device constituting the transmission and reception system in combination with the reception device.

Additionally, this computer program is a computer program for causing the computer to function as first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

The reception device in that case includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, and second authentication data encryption means for encrypting the same authentication data as the authentication data predetermined between the reception device and the transmission device and used in the transmission device into encrypted authentication data by using the solution generated by the second solution generation means. The second solution generation means is configured to generate at least one solution when the reception means receives the encrypted authentication data transmitted from the transmission device, the second authentication data encryption means is configured to generate at least one of the encrypted authentication data from one of the authentication data by using the at least one solution generated by the second solution generation means, and the reception device includes authentication means for authenticating the transmission device that sent the encrypted authentication data to be valid, when one of the encrypted authentication data generated by the second authentication data encryption means matches the encrypted authentication data transmitted from the transmission device.

The present inventor also proposes, as one aspect of the second invention of this application, a computer program for causing a computer, for example, a general-purpose computer, to function as the transmission device of the transmission and reception system of the second invention as described above.

An example of the computer program in that case is a computer program for causing a computer to function as the transmission device constituting the transmission and reception system in combination with the reception device.

This computer program is a computer program for causing the computer to function as first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

The reception device in that case includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, and second authentication data decryption means for decrypting the encrypted authentication data received by the reception means to generate the authentication data by using the solution generated by the second solution generation means. The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, and the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

The present inventor also proposes, as one aspect of the first invention of this application, a computer program for causing a computer, for example, a general-purpose computer, to function as the reception device of the transmission and reception system of the first invention described above.

An example of the computer program in that case is a computer program for causing a computer to function as a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

This computer program is a computer program for causing the computer to function as reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means, and authentication means. The second solution generation means is configured to generate at least one solution when the reception means receives the encrypted authentication data transmitted from the transmission device, the second authentication data encryption means is configured to generate at least one of the encrypted authentication data from one of the authentication data by using the at least one solution generated by the second solution generation means, and the authentication means is configured to authenticate the transmission device that sent the encrypted authentication data to be valid, when one of the encrypted authentication data generated by the second authentication data encryption means matches the encrypted authentication data transmitted from the transmission device.

The present inventor also proposes, as one aspect of the second invention of this application, a computer program for causing a computer, for example, a general-purpose computer, to function as the reception device of the transmission and reception system of the second invention described above.

An example of the computer program in that case is a computer program for causing a computer to function as a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, and transmission means for transmitting the encrypted authentication data generated by the first authentication data encryption means via a network.

This computer program is a computer program for causing the computer to function as reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data decryption means for decrypting the encrypted authentication data received by the reception means to generate the authentication data by using the solution generated by the second solution generation means, and authentication means. The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, and the authentication means is configured to authenticate the transmission device that sent the encrypted authentication data to be valid, when one of the authentication data generated by the second authentication data decryption means matches the same authentication data as the authentication data predetermined between the reception device and the transmission device and used in the transmission device.

All of the inventions described above perform authentication of the transmission device by the reception device by using the encrypted authentication data transmitted from the reception device to the transmission device. On the other hand, it is also possible to omit such authentication, and to understand the present invention as a technology for performing encryption communication between the transmission device and the reception device including the first solution generation means and the second solution generation means capable of generating a new solution that becomes always the same when generated under the same condition, respectively. Such an invention does not achieve the object in the present invention. However, on the other hand, such an invention solves the key delivery problem, and in the case where the solution is used for enabling one device to perform at least one of encryption and decryption, and enabling the other device to perform at least one of encryption and decryption with respect to the one device (in terms of the present invention, for sharing the same condition between the reception device and the transmission device), so that the reception device and the transmission device have a common key, or use a common algorithm, etc., it becomes unnecessary to transmit and receive the solution itself between the both.

Such encrypted communication realized by such a technique has a very high safety. An invention with emphasis placed on such encrypted communication that does not essentially require authentication is sometimes referred to as, for example, transmission and reception system "specialized for encrypted communication".

The transmission and reception system specialized for such encrypted communication is as follows, for example. However, of course, in the following encrypted communication, instead of the authentication using the solution as described above, prior to performing encrypted communication, for example, the reception device may be configured to be able to perform authentication of the transmission device by a known method. Like the inventions explained above, the invention concerning the transmission and reception system specialized for encrypted communication can be roughly divided into a first invention and a second invention according to whether data to be compared on the reception device side is encrypted authentication data or authentication data.

A transmission and reception system according to a first invention specialized for encrypted communication is a transmission and reception system including a transmission device and a reception device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing and the reception device including reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means, determination means for determining whether or not one of the encrypted authentication data generated by the second authentication data encryption means matches the encrypted authentication data transmitted from the transmission device, and second encryption decryption means capable of performing at least one of encryption processing and decryption processing.

The second solution generation means is configured to generate at least one solution when the reception means receives the encrypted authentication data transmitted from the transmission device, the second authentication data encryption means is configured to generate at least one of the encrypted authentication data from at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data by using the same solution as the solution used by the first encryption decryption means among solutions generated by the second solution generation means.

Further, the transmission device and the reception device are configured to perform, after the determination means determines that one of the encrypted authentication data generated by the second authentication data encryption means matches the encrypted authentication data transmitted from the transmission device, at least one of processing of transmitting encrypted data encrypted by the first encryption decryption means from the transmission device to the reception device, and decrypting the encrypted data by the second encryption decryption means, and processing of transmitting encrypted data encrypted by the second encryption decryption means from the reception device to the transmission device, and decrypting the encrypted data by the first encryption decryption means.

A transmission and reception system according to a second invention specialized for encrypted communication is a transmission and reception system including a transmission device and a reception device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing and the reception device including reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data decryption means for decrypting the encrypted authentication data received by the reception means to generate the authentication data by using the solution generated by the second solution generation means, determination means for determining whether or not one of the authentication data generated by the second authentication data decryption means matches the same authentication data as the authentication data predetermined between the reception device and the transmission device and used in the transmission device, and second encryption decryption means capable of performing at least one of encryption processing and decryption processing.

The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

Further, the transmission device and the reception device are configured to perform, after the determination means determines that one of the encrypted authentication data generated by the second authentication data encryption decryption means matches the same authentication data as the authentication data predetermined between the reception device and the transmission device and used in the transmission device, at least one of processing of transmitting encrypted data encrypted by the first encryption decryption means from the transmission device to the reception device,

and decrypting the encrypted data by the second encryption decryption means, and processing of transmitting encrypted data encrypted by the second encryption decryption means from the reception device to the transmission device, and decrypting the encrypted data by the first encryption decryption means.

The present inventor also proposes the transmission device in the first transmission and reception system specialized for encrypted communication as one aspect of the present invention. Its effect is equal to the effect of the first transmission and reception system specialized for encrypted communication.

The transmission device serving as an example is a transmission device constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing or decryption processing.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means, determination means for determining whether one of the encrypted authentication data generated by the second authentication data encryption means matches the encrypted authentication data transmitted from the transmission device, and second encryption decryption means capable of performing at least one of encryption processing and decryption processing.

The second solution generation means is configured to generate at least one solution when the reception means receives the encrypted authentication data transmitted from the transmission device, the second authentication data encryption means is configured to generate at least one of the encrypted authentication data from one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

Further, the transmission device and the reception device are configured to perform, after the determination means determines that one of the encrypted authentication data generated by the second authentication data encryption means matches the encrypted authentication data transmitted from the transmission device, at least one of processing of transmitting encrypted data encrypted by the first encryption decryption means from the transmission device to the reception device, and decrypting the encrypted data by the second encryption decryption means, and processing of transmitting encrypted data encrypted by the second encryption decryption means from the reception device to the transmission device, and decrypting the encrypted data by the first encryption decryption means.

The present inventor also proposes the transmission device in the second transmission and reception system specialized for encrypted communication as one aspect of the present invention. Its effect is equal to the effect of the second transmission and reception system specialized for encrypted communication.

The transmission device serving as an example is a transmission device constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data decryption means for decrypting the encrypted authentication data received by the reception means to generate the authentication data by using the solution generated by the second solution generation means, determination means for determining whether or not one of the authentication data generated by the second authentication data decryption means matches the same authentication data as the authentication data predetermined between the reception device and the transmission device and used in the transmission device, and second encryption decryption means capable of performing at least one of encryption processing and decryption processing.

The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

The transmission device and the reception device are configured to perform, after the determination means determines that one of the authentication data generated by the second authentication data decryption means matches the same authentication data as the authentication data predetermined between the reception device and the transmission device and used in the transmission device, at least one of processing of transmitting encrypted data encrypted by the first encryption decryption means from the transmission device to the reception device and decrypting the encrypted data by the second encryption decryption means and processing of transmitting encrypted data encrypted by the second encryption decryption means from the reception device to the transmission device and decrypting the encrypted data by the first encryption decryption means.

The present inventor also proposes the reception device in the first transmission and reception system specialized for encrypted communication as one aspect of the present invention. Its effect is equal to the effect of the first transmission and reception system specialized for encrypted communication.

The reception device serving as an example is a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means, determination means for determining whether or not one of the encrypted authentication data generated by the second authentication data encryption means matches the encrypted authentication data transmitted from the transmission device, and second encryption decryption means capable of performing at least one of encryption processing and decryption processing.

The second solution generation means is configured to generate at least one solution when the reception means receives the encrypted authentication data transmitted from the transmission device, the second authentication data encryption means is configured to generate at least one of the encrypted authentication data from at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

The transmission device and the reception device are configured to perform, after the determination means determines that one of the encrypted authentication data generated by the second authentication data encryption means matches the encrypted authentication data transmitted from the transmission device, at least one of processing of transmitting encrypted data encrypted by the first encryption decryption means from the transmission device to the reception device and decrypting the encrypted data by the second encryption decryption means and processing of transmitting encrypted data encrypted by the second encryption decryption means from the reception device to the transmission device and decrypting the encrypted data by the first encryption decryption means.

The present inventor also proposes the reception device in the second transmission and reception system specialized for encrypted communication as one aspect of the present invention. Its effect is equal to the effect of the second transmission and reception system specialized for encrypted communication.

The reception device serving as an example is a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data decryption means for decrypting the encrypted authentication data received by the reception means to generate the authentication data by using the solution generated by the second solution generation means, determination means for determining whether or not one of the authentication data generated by the second authentication data decryption means matches the same authentication data as the authentication data predetermined between the reception device and the transmission device and used in the transmission device, and second encryption decryption means capable of performing at least one of encryption processing and decryption processing.

The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means, the first encryption decryption means is configured to encrypt plaintext data to be transmitted, , or to decrypt encrypted data transmitted from the reception device to convert the encrypted data into plaintext data, by using the solution generated by the first solution generation means and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

The transmission device and the reception device are configured to perform, after the determination means determines that one of the authentication data generated by the second authentication data decryption means matches the same authentication data as the authentication data predetermined between the reception device and the transmission device and used in the transmission device, at least one of processing of transmitting encrypted data encrypted by the first encryption decryption means from the transmission device to the reception device and decrypting the encrypted data by the second encryption decryption means and processing of transmitting encrypted data encrypted by the second encryption decryption means from the reception device to the transmission device and decrypting the encrypted data by the first encryption decryption means.

The present inventor also proposes a method performed in the transmission device of the first transmission and reception system specialized for encrypted communication as one aspect of the present invention. Its effect is equal to the effect of the first transmission and reception system specialized for encrypted communication.

The method serving as an example is a method performed in a computer of the transmission device, the transmission device including the computer and constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs.

The method includes the processes to be performed by the computer, the processes including a process of generating a new solution based on the initial solution recorded in the first solution recording means, the new solution becoming always the same when generated under the same condition, a process of encrypting authentication data, the authentication data being predetermined data, into encrypted authentication data by using the generated solution, and a process of transmitting the generated encrypted authentication data via a network.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the computer of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means, determination means for determining whether or not one of the encrypted authentication data generated by the second authentication data encryption means matches the encrypted authentication data transmitted from the transmission device, and second encryption decryption means capable of performing at least one of encryption processing and decryption processing.

The method further includes the processes performed by the computer, the processes including a process of generating a new solution after the solution used for generating the encrypted authentication data transmitted to the reception device, and a process of encrypting plaintext data to be transmitted, or decrypting encrypted data transmitted from the reception device to convert the encrypted data into plaintext data, by using the generated solution.

The second solution generation means is configured to generate at least one solution when the reception means receives the encrypted authentication data transmitted from the transmission device, the second authentication data encryption means is configured to generate at least one of the encrypted authentication data from at least one of the authentication data by using the at least one solution generated by the second solution generation means, the second solution generation means is configured to generate a solution under the same condition as the condition under which the computer of the transmission device generates the solution, after the solution generated by the second solution generation means and used for encrypting the encrypted authentication data that matches the encrypted authentication data transmitted from the transmission device, and the second encryption decryption means is configured to encrypt plaintext data to be transmitted, or to decrypt encrypted data transmitted from the transmission device to convert the encrypted data into plaintext data, by using the same solution as the solution used by the computer of the transmission device among solutions generated by the second solution generation means.

The transmission device and the reception device are configured to perform, after the determination means determines that one of the encrypted authentication data generated by the second authentication data encryption means matches the encrypted authentication data transmitted from the transmission device, at least one of processing of transmitting encrypted data encrypted by the computer of the transmission device from the transmission device to the reception device, and decrypting the encrypted data by the second encryption decryption means, and processing of transmitting encrypted data encrypted by the second encryption decryption means from the reception device to the transmission device, and decrypting the encrypted data by the computer of the transmission device.

The present inventor also proposes a method performed in the transmission device of the second transmission and reception system specialized for encrypted communication as one aspect of the present invention. Its effect is equal to the effect of the second transmission and reception system specialized for encrypted communication.

The method serving as an example is a method performed in a computer of the transmission device, the transmission device including the computer and constituting a transmission and reception system in combination with a reception device, the transmission device including first solution recording means for recording an initial solution at least in an initial state, the initial solution being data used for generating a solution, the solution being a predetermined number of series of at least one of characters, numbers, and signs.

The method includes the processes to be performed by the computer, the processes including a process of generating a new solution based on the initial solution recorded in the first solution recording means, the new solution becoming always the same when generated under the same condition, a process of encrypting authentication data, the authentication data being predetermined data, into encrypted authentication data by using the generated solution, and a process of transmitting the generated encrypted authentication data via a network.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the computer of the transmission device, the new solution becoming always the same when using the same initial solution and generated under the same condition, second authentication data decryption means for decrypting the encrypted authentication data received by the reception means to generate the authentication data by using the solution generated by the second solution generation means, determination means for determining whether or not one of the authentication data generated by the second authentication data decryption means matches the same authentication data as the authentication data predetermined between the reception device and the transmission device and used in the transmission device, and second encryption decryption means capable of performing at least one of encryption processing and decryption processing.

The method further includes the processes performed by the computer, the processes including a process of generating a new solution, after the solution used for generating the encrypted authentication data transmitted to the reception device and a process of encrypting plaintext data to be transmitted, or decrypting encrypted data transmitted from the reception device to convert the encrypted data into plaintext data, by using the solution generated by the computer of the transmission device.

The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, the second solution generation means is configured to generate a solution under the same condition as the condition under which the computer of the transmission device generates the solution, after the solution used for decrypting the authentication data that matches the same authentication data as the authentication data predetermined between the reception device and the transmission device and used in the transmission device and that is generated by the second authentication data decryption means, and the second encryption decryption means is configured to encrypt plaintext data to be transmitted, or to decrypt encrypted data transmitted from the transmission device to convert the encrypted data into plaintext data, by using the same solution as the solution used by the computer of the transmission device among solutions generated by the second solution generation means.

The transmission device and the reception device are configured to perform, after the determination means determines that one of the authentication data generated by the second authentication data decryption means matches the same authentication data as the authentication data predetermined between the reception device and the transmission device and used in the transmission device, at least one of processing of transmitting encrypted data encrypted by the computer of the transmission device from the transmission device to the reception device and decrypting the encrypted data by the second encryption decryption means and processing of transmitting encrypted data encrypted by the second encryption decryption means from the reception device to the transmission device and decrypting the encrypted data by the computer of the transmission device.

The present inventor also proposes a method performed in the reception device of the first transmission and reception system specialized for encrypted communication as one aspect of the present invention. Its effect is equal to the effect of the first transmission and reception system specialized for encrypted communication.

The method serving as an example is a method performed in a computer of a reception device, the reception device including the computer and constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first authentication data encryption means, first encryption decryption means capable of performing at least one of encryption processing and decryption processing, and transmission means for transmitting the encrypted authentication data generated by the first authentication data encryption means via a network, the first encryption decryption means being configured to encrypt plaintext data to be transmitted, or to decrypt encrypted data transmitted from the reception device to convert the encrypted data into plaintext data, by using the solution generated by the first solution generation means.

The computer including second solution recording means for recording the same initial solution as the initial solution recorded in the first solution recording means of the transmission device at least in an initial state.

The method includes the processes performed by the computer, the processes including a process of receiving, via the network, the encrypted authentication data transmitted from the transmission device, a process of generating, based on the initial solution recorded in the second solution recording means, a new solution that is the same as the new solution generated by the first solution generation means of the transmission device, the new solution becoming always the same when using the same initial solution and generated under the same condition, a process of encrypting the same authentication data as the authentication data predetermined between the reception device and the transmission device and used in the transmission device into encrypted authentication data by using the generated solution, a process of determining whether or not one of the generated encrypted authentication data matches the encrypted authentication data transmitted from the transmission device, a process of generating a solution under the same condition as the condition under which the first solution generation means generates the solution, after the solution used for encrypting the encrypted authentication data that matches the encrypted authentication data transmitted from the transmission device and that is generated by the computer, and a process of encrypting plaintext data to be transmitted, or to decrypt encrypted data transmitted from the transmission device to convert the encrypted data into plaintext data, by using the same solution as the solution used by the first encryption decryption means among solutions generated anew.

Additionally, the first solution generation means is configured to generate a new solution after the solution used for generating the encrypted authentication data transmitted to the reception device.

The transmission device and the reception device are configured to perform, after the computer of the reception device determines that one of the encrypted authentication data generated by the computer of the reception device matches the encrypted authentication data transmitted from the transmission device, at least one of processing of transmitting encrypted data encrypted by the first encryption decryption means from the transmission device to the reception device, and decrypting the encrypted data by the computer of the reception device, and processing of transmitting encrypted data encrypted by the computer of the reception device from the reception device to the transmission device, and decrypting the encrypted data by the first encryption decryption means.

The present inventor also proposes a method performed in the reception device of the second transmission and reception system specialized for encrypted communication as one aspect of the present invention. Its effect is equal to the effect of the second transmission and reception system specialized for encrypted communication.

The method serving as an example is a method performed in a computer of a reception device, the reception device including the computer and constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, first encryption decryption means capable of performing at least one of encryption processing and decryption processing, and transmission means for transmitting the encrypted authentication data generated by the first authentication data encryption means via a network, the first encryption decryption means being configured to encrypt plaintext data to be transmitted, or to decrypt encrypted data transmitted from the reception device to convert the encrypted data into plaintext data, by using the solution generated by the first solution generation means.

The computer including second solution recording means for recording the same initial solution as the initial solution recorded in the first solution recording means of the transmission device at least in an initial state.

The method includes the processes performed by the computer, the processes including a process of receiving, via the network, the encrypted authentication data transmitted from the transmission device, a process of generating, based on the initial solution recorded in the second solution recording means, a new solution that is the same as the new solution generated by the first solution generation means of the transmission device, the new solution becoming always the same when using the same initial solution and generated under the same condition, a process of decrypting the encrypted authentication data received by the reception means to generate the authentication data by using the generated solution, a process of determining whether or not one of the generated authentication data matches the same authentication data as the authentication data predetermined between the reception device and the transmission device and used in the transmission device, a process of generating a solution under the same condition as the condition under which the first solution generation means generates the solution, after the solution used for decrypting the authentication data that matches the same authentication data as the authentication data predetermined between the reception device and the transmission device and used in the transmission device and that is generated by the computer, and a process of encrypting plaintext data to be transmitted, or to decrypt encrypted data transmitted from the transmission device to convert the encrypted data into plaintext data, by using the same solution as the solution used by the first encryption decryption means among solutions generated anew.

The first solution generation means is configured to generate a new solution after the solution used for generating the encrypted authentication data transmitted to the reception device.

The transmission device and the reception device are configured to perform, after the computer of the reception device determines that one of the authentication data generated by the computer of the reception device matches the same authentication data as the authentication data predetermined between the reception device and the transmission device and used in the transmission device, at least one of processing of transmitting encrypted data encrypted by the first encryption decryption means from the transmission device to the reception device and decrypting the encrypted data by the computer of the reception device and processing of transmitting the encrypted data encrypted by the computer of the reception device from the reception device to the transmission device and decrypting the encrypted data by the first encryption decryption means.

The present inventor also proposes, as one aspect of the present invention, a computer program for causing, for example, a general-purpose computer to function as the transmission device of the first transmission and reception system specialized for encrypted communication.

The computer program serving as an example is a computer program for causing a computer to function as a transmission device constituting a transmission and reception system in combination with a reception device.

The computer program is for causing the computer to function as first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means, determination means for determining whether or not one of the encrypted authentication data generated by the second authentication data encryption means matches the encrypted authentication data transmitted from the transmission device, and second encryption decryption means capable of performing at least one of encryption processing and decryption processing.

The second solution generation means is configured to generate at least one solution when the reception means receives the encrypted authentication data transmitted from the transmission device, the second authentication data encryption means is configured to generate at least one of the encrypted authentication data from at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

The transmission device and the reception device are configured to perform, after the determination means determines that one of the encrypted authentication data generated by the second authentication data encryption means matches the encrypted authentication data transmitted from the transmission device, at least one of processing of transmitting encrypted data encrypted by the first encryption decryption means from the transmission device to the reception device and decrypting the encrypted data by the second encryption decryption means and processing of transmitting encrypted data encrypted by the second encryption decryption means from the reception device to the transmission device and decrypting the encrypted data by the first encryption decryption means.

The present inventor also proposes, as one aspect of the present invention, a computer program for causing, for example, a general-purpose computer, to function as the transmission device of the second transmission and reception system specialized for encrypted communication.

The computer program serving as an example is a computer program for causing a computer to function as the transmission device constituting the transmission and reception system in combination with the reception device.

This computer program is a computer program for causing the computer to function as first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing.

The reception device includes reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data decryption means for decrypting the encrypted authentication data received by the reception means to generate the authentication data by using the solution generated by the second solution generation means, determination means for determining whether or not one of the authentication data generated by the second authentication data decryption means matches the same authentication data as the authentication data predetermined between the reception device and the transmission device and used in the transmission device, and second encryption decryption means capable of performing at least one of encryption processing and decryption processing.

The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

The transmission device and the reception device are configured to perform, after the determination means determines that one of the authentication data generated by the second authentication data decryption means matches the same authentication data as the authentication data predetermined between the reception device and the transmission device and used in the transmission device, at least one of processing of transmitting encrypted data encrypted by the first encryption decryption means from the transmission device to the reception device and decrypting the encrypted data by the second encryption decryption means and processing of transmitting encrypted data encrypted by the second encryption decryption means from the reception device to the transmission device and decrypting the encrypted data by the first encryption decryption means.

The present inventor also proposes, as one aspect of the present invention, a computer program for causing, for example, a general-purpose computer, to function as the transmission and reception device of the first reception system specialized for encrypted communication.

The computer program serving as an example is a computer program for causing a computer to function as a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing.

The computer program is for causing the computer to function as reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data encryption means for encrypting the same authentication data as the authentication data predetermined between the reception device and the transmission device and used in the transmission device into encrypted authentication data by using the solution generated by the second solution generation means, determination means for determining whether or not one of the encrypted authentication data generated by the second authentication data encryption means matches the encrypted authentication data transmitted from the transmission device, and second encryption decryption means capable of performing at least one of encryption processing and decryption processing.

The second solution generation means is configured to generate at least one solution when the reception means receives the encrypted authentication data transmitted from the transmission device, the second authentication data encryption means is configured to generate at least one of the encrypted authentication data from one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

The transmission device and the reception device are configured to perform, after the determination means determines that one of the encrypted authentication data generated by the second authentication data encryption means matches the encrypted authentication data transmitted from the transmission device, at least one of processing of transmitting encrypted data encrypted by the first encryption decryption means from the transmission device to the reception device and decrypting the encrypted data by the second encryption decryption means and processing of transmitting encrypted data encrypted by the second encryption decryption means from the reception device to the transmission device and decrypting the encrypted data by the first encryption decryption means.

The present inventor also proposes, as one aspect of the present invention, a computer program for causing, for example, a general-purpose computer, to function as the reception device of the second transmission and reception system specialized for encrypted communication.

The computer program serving as an example is a computer program for causing a computer to function as a reception device constituting a transmission and reception system in combination with a transmission device, the transmission device including first solution recording means for recording an initial solution at least in an initial state, the initial solution being data used for generating a solution, the solution being a predetermined number of series of at least one of characters, numbers, and signs, first solution generation means for generating a new solution based on the initial solution recorded in the first solution recording means, the new solution becoming always the same when generated under the same condition, first authentication data encryption means for encrypting authentication data, the authentication data being predetermined data, into encrypted authentication data by using the solution generated by the first solution generation means, transmission means for transmitting the encrypted authentication data generated by the first authentication data encryption means via a network, and first encryption decryption means capable of performing at least one of encryption processing and decryption processing.

The computer program is for causing the computer to function as reception means for receiving, via the network, the encrypted authentication data transmitted from the transmission device, second solution recording means for recording the same initial solution as the initial solution recorded in the first solution recording means of the transmission device at least in an initial state, second solution generation means for generating, based on the initial solution recorded in the second solution recording means, a new solution that is the same as the new solution generated by the first solution generation means of the transmission device, the new solution becoming always the same when using the same initial solution and generated under the same condition, second authentication data decryption means for decrypting the encrypted authentication data received by the reception means to generate the authentication data by using the solution generated by the second solution generation means, determination means for determining whether or not one of the authentication data generated by the second authentication data decryption means matches the same authentication data as the authentication data predetermined between the reception device and the transmission device and used in the transmission device, and second encryption decryption means capable of performing at least one of encryption processing and decryption processing.

The second solution generation means is configured to generate at least one solution when the reception means receives the encrypted authentication data transmitted from the transmission device, the second authentication data decryption means is configured to decrypt one of the encrypted authentication data to generate at least one of the authentication data by using the at least one solution generated by the second solution generation means, the first solution generation means is configured to generate a new solution, after the solution used for generating the encrypted authentication data transmitted to the reception device, the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means, the first encryption decryption means is configured to encrypt plaintext data to be transmitted, or to decrypt encrypted data transmitted from the reception device to convert the encrypted data into plaintext data, by using the solution generated by the first solution generation means, and the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means.

The transmission device and the reception device are configured to perform, after the determination means determines that one of the authentication data generated by the second authentication data decryption means matches the same authentication data as the authentication data predetermined between the reception device and the transmission device and used in the transmission device, at least one of processing of transmitting encrypted data encrypted by the first encryption decryption means from the transmission device to the reception device and decrypting the encrypted data by the second encryption decryption means and processing of transmitting encrypted data encrypted by the second encryption decryption means from the reception device to the transmission device and decrypting the encrypted data by the first encryption decryption means.

**Brief Description of Drawings**

FIG. 1 is a diagram showing the entire configuration of a communication system according to one embodiment;

FIG. 2 is a diagram showing the external appearance of a client included in the communication system shown in FIG. 1;

FIG. 3 is a diagram showing the hardware configuration of the client included in the communication system shown in FIG. 1;

FIG. 4 is a block diagram showing the functional blocks generated inside the client included in the communication system shown in FIG. 1;

FIG. 5 is a block diagram showing the functional blocks generated inside a server included in the communication system shown in FIG. 1;

FIG. 6 is a diagram showing the flow of processing performed when communication is performed in the communication system shown in FIG. 1;

FIG. 7 is a block diagram showing functional blocks generated inside a server included in a communication system in a modification 4;

FIG. 8 is a block diagram showing functional blocks generated inside a server included in a communication system according to a second embodiment; and

FIG. 9 is a diagram showing a flow of processing performed when communication is performed in the communication system according to the second embodiment.

**Description of Embodiment**

Preferred first and second embodiments of the present invention are described below. Common objects in the description of both the embodiments (and modifications) are denoted by common reference numerals and signs and common description is omitted depending on a case.

<<The first embodiment>>

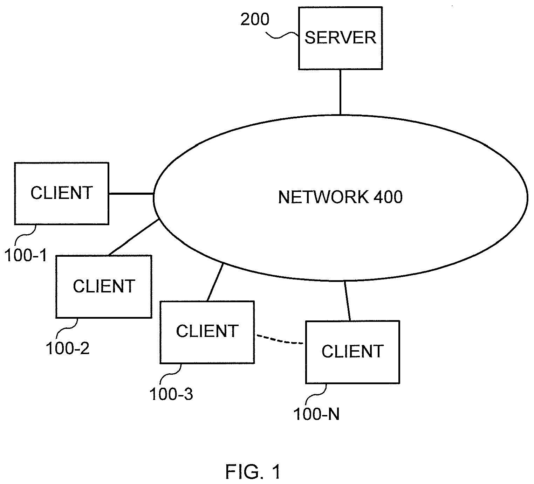

FIG. 1 schematically shows the entire configuration of a communication system as one preferable embodiment of a transmission and reception system of the present invention.

The communication system according to the first embodiment is configured by including a plurality of clients 100-1 to 100-N (hereinafter also simply described as "the client 100".), and a server 200. All of these can be connected to a network 400.

The network 400 is the Internet in this embodiment, although not limited to this.

The client 100 in this embodiment corresponds to a transmission device in the present application. Additionally, the server 200 in this embodiment corresponds to a reception device in the present application. However, the server 200 and the client 100 corresponding to the reception device and the transmission device in the present application do not need to be in the so-called server and client relationship, and may be two communication devices on an equal level with each other.

Although not limited to this, it is assumed that the communication system in this embodiment is (a part of) the Internet banking system, the server 200 is managed by a bank, and the clients 100-1 to 100-N are owned by respective users utilizing the Internet banking.

The client 100 includes a computer. More specifically, the client 100 in this embodiment is configured by a general-purpose computer.

Next, the configuration of the client 100 is described. The configuration of each of the clients 100-1 to 100-N is the same in connection with the present invention.

The client 100 is a mobile phone, a smart phone, a tablet, a notebook computer, a desktop personal computer, etc. All of these are required to be able to perform communication via the network 400, to generate functional blocks inside them that are described later by installing a computer program described later, and to perform processing described below, and as long as that is possible, the other specifications do not particularly matter.

For example, when the client 100 is a smart phone or a tablet, the client 100 as the smart phone may be, for example, an iPhone manufactured and sold by Apple Japan, LLC, and the client 100 as the tablet may be, for example, an iPad manufactured and sold by Apple Japan LLC. Hereinafter, although not limited to this, a description will be given by assuming that the client 100 is a smart phone.

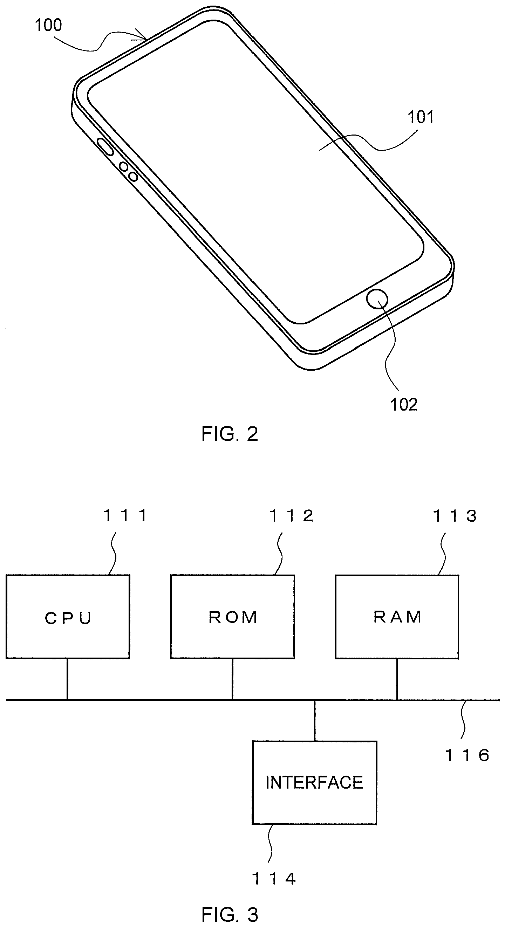

An example of the external appearance of the client 100 is shown in FIG. 2.

The client 100 includes a display 101. The display 101 is for displaying a still image or a moving image, and a known or well-known display may be used for the display 101. The display 101 is, for example, a liquid crystal display. The client 100 also includes an input device 102. The input device 102 is for a user to carry out a desired input to the client 100. A known or a well-known input device can be used for the input device 102. Although the input device 102 of the client 100 in this embodiment is a button type input device, the input device 102 is not to be limited to this, and it is also possible to use a numeric keypad, a keyboard, a trackball, a mouse, etc. Especially, when the client 100 is a notebook computer or a desktop PC, the input device 102 will be a keyboard, a mouse, etc. Additionally, when the display 101 is a touch panel, the display 101 serves the function of the input device 102, and is made to do so in this embodiment.

The hardware configuration of the client 100 is shown in FIG. 3.

A hardware includes a CPU (central processing unit) 111, a ROM (read only memory) 112, a RAM (random access memory) 113, and an interface 114, and these are mutually connected by a bus 116.

The CPU 111 is an arithmetic device that performs calculation. The CPU 111 performs processing described later by, for example, executing a computer program recorded in the ROM 112 or the RAM 113. Although not shown, the hardware may include a large-capacity recording device such as a HDD (hard disk drive), and the computer program may be recorded in the large-capacity recording device.

The computer program as used herein includes at least a computer program for causing this client 100 to function as a client of the present invention. This computer program may be pre-installed in the client 100, or may be installed in the client 100 after shipping. The installation of this computer program in the client 100 may be performed via a predetermined recording medium such as a memory card, or may be performed via a network such as a LAN or the Internet.

A computer program and data necessary for the CPU 111 to perform processing described later is recorded in the ROM 112. The computer program recorded in the ROM 112 is not limited to this, and when the client 100 is a smart phone, a computer program and data for causing the client to function as a smart phone, for example, a computer program and data for performing telephone calls and e-mails, are recorded. The client 100 is also enabled to browse homepages based on data received via the network 400, and a known web browser for making it possible is implemented in the client 100.

The RAM 113 provides a work area required for the CPU 111 to perform processing. Depending on the case, the above-described computer program and data may be recorded.

The interface 114 exchanges data between the CPU 111, the RAM 113, etc., which are connected to the interface 114 via the bus 116, and the outside. The above-described display 101 and input device 102 are connected to the interface 114. An operation content that is input from the input device 102 is input to the bus 116 from the interface 114. Additionally, as is well known, image data for displaying an image on the display 101 is output from the interface 114 to the display 101. The interface 114 is also connected to a transmission and reception mechanism (illustration is omitted), which is a known means for performing communication with the outside via the network 400, which is the Internet, thereby enabling the client 100 to transmit data via the network 400, and to receive data via the network 400. The transmission and reception of the data via this network 400 may be performed by wire, or may be performed wirelessly. For example, when the client 100 is a smart phone, this communication will be usually performed wirelessly. The configuration of the transmission and reception mechanism can be a known or well-known mechanism as long as it is possible. The data that the transmission and reception mechanism received from the network 400 is configured to be received by the interface 114, and the data given to the transmission and reception mechanism from the interface 114 is configured to be sent by the transmission and reception mechanism to the outside, for example, the server 200, via the network 400.

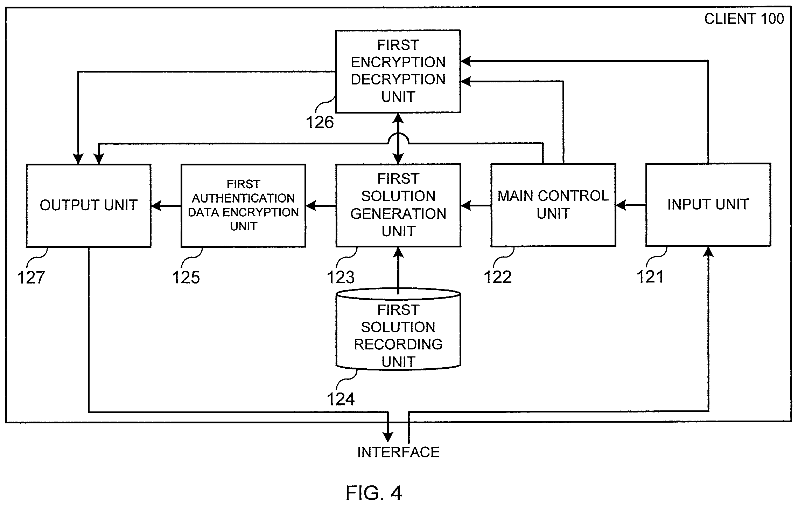

When the CPU 111 executes the computer program, the functional blocks as shown in FIG. 4 are generated inside the client 100. Note that, although the following functional blocks may be generated by the function of the above-described computer program alone for causing the client 100 to function as the client of the present invention, the following functional blocks may be generated by the cooperation of the above-described computer program and a computer program such as an OS that is installed in the client 100.

In relationship with the functions of the present invention, an input unit 121, a main control unit 122, a first solution generation unit 123, a first solution recording unit 124, a first authentication data encryption unit 125, a first encryption decryption unit 126, and an output unit 127 are generated inside the client 100.

The input unit 121 receives an input from the interface 114.

The input from the interface 114 includes, for example, identification information (a user ID) described later, banking information that is information for making settlement, etc. via the Internet banking, etc. The identification information is information unique for each user for identifying the user among other users, and is generally called the user ID, etc. Each of these is input from the input device 102, and is input to the input unit 121 via the interface 114.

When the input unit 121 receives the data of the user ID, the input unit 121 is configured to send it to the main control unit 122, and when the input unit 121 receives the banking information, the input unit 121 is configured to send it to the first encryption decryption unit 126.

The input unit 121 may also receive, via the interface 114, authentication data that is sent from the server 200 and is received by the transmission and reception mechanism. When the authentication data is received, the input unit 121 is configured to send the authentication data to the main control unit 122.

The input unit 121 may also receive, via the interface 114, encrypted data that is sent from the server 200 and is received by the transmission and reception mechanism. The input unit 121 is configured to send the received encrypted data to the first encryption decryption unit 126.

The main control unit 122 controls the entire functional blocks generated inside the client 100.

The main control unit 122 may receive the data of the user ID from the input unit 121. When the data of the user ID is received, the main control unit 122 sends it to the output unit 127, and sends an instruction to generate a solution to the first solution generation unit 123.

The main control unit 122 may receive the authentication data. When the authentication data is received, the main control unit 122 sends the data about permission that encryption and decryption may be performed to the first encryption decryption unit 126.

The first solution generation unit 123 generates a solution when the instruction to generate a solution is received.

Although the first solution generation unit 123 may receive the instruction to generate a solution from the main control unit 122, the first solution generation unit 123 may receive the instruction from the first encryption decryption unit 126 as described later.

Although the method of generating a solution is described later, the solution in this embodiment is formed by a predetermined number of series of at least one of characters, numbers, and signs, and the solution is configured to be always the same if the solution is generated under the same condition based on an initial solution. Typically, the solution is a pseudorandom number, and in this embodiment, although not limited to this, each solution is configured to be generated such that the number of digits or the number of characters of the solution always becomes constant.

When generating at least a first solution, the first solution generation unit 123 uses the data of an initial solution recorded in the first solution recording unit 124 and other data. The data of the initial solution is recorded in the first solution generation unit 123 in at least an initial state, i.e., the state before a first new solution is generated by the first encryption decryption unit 126. The data of the initial solution affects the solution generated later. The data of the initial solution may have the same format as the data of a solution, i.e., a predetermined number of series of at least one of characters, numbers, and signs, and the number of digits or the number of characters of the solution may be or may not be the same as that of the solution. However, in this embodiment, although not limited to this, the data of the initial solution is configured to have the same format as the data of a solution.

When the first solution generation unit 123 receives the instruction to generate the solution from the main control unit 122, the first solution generation unit 123 sends the generated solution to the first authentication data encryption unit 125, and when the first solution generation unit 123 receives a similar instruction from the first encryption decryption unit 126, the first solution generation unit 123 sends the generated solution to the first encryption decryption unit 126.

The first authentication data encryption unit 125 encrypts authentication data, which is predetermined data, shared between the client 100 and the server 200 by using the solution. As described below, the first encryption decryption unit 126 also sometimes has an ability for performing encryption. In that case, the first encryption decryption unit 126 may function as the first authentication data encryption unit 125 as well. The authentication data may be encrypted by any method as long as the first authentication data encryption unit 125 uses the solution. However, the method of the encryption is the same method as a method used by a second authentication data encryption unit described below in the server 200. Although not limited to this, in this embodiment, the first authentication data encryption unit 125 is configured to encrypt, by using the solution as a key, the authentication data by using a publicly-known or well-known method of a common key system. However, the key only has to be used by the first authentication data encryption unit 125 in a form of affecting processing of the encryption. A form of use of the solution is not particularly limited. For example, the solution may be used for changing an algorithm for determining the processing of the encryption of the authentication data. Data obtained as a result of the first authentication data encryption unit 125 encrypting the authentication data is encrypted authentication data. The first authentication data encryption unit 125 is configured to send the generated encrypted authentication data to the output unit 127.

Note that, in order to perform the encryption of the authentication data, the first authentication data encryption unit 125 requires the authentication data. The authentication data may be fixed data that does not change. In that case, the first authentication data encryption unit 125 may be configured to always retain the authentication data. On the other hand, the authentication data may be data that changes over time as long as the authentication data is shared by the client 100 and the server 200. For example, the solution generated by the first solution generation unit 123 is synchronized with a solution generated by a second solution generation unit described below in the server 200 as described below. By providing, for example, in the first authentication data encryption unit 125, a mechanism different from the first solution generation unit 123 for continuously generating solutions like the solution generated by the first solution generation unit 123 and, on the other hand, providing a mechanism like the second solution generation unit in, for example, the second authentication data encryption unit 225 in the server 200, it is also possible to use changing solutions respectively generated by the mechanisms as authentication data, which is predetermined data, shared between the client 100 and the server 200. Alternatively, it is also possible to divert, as the authentication data, information acquirable in a remote point such as time of that point in time, weather, temperature, and the like of a certain point at certain time, and an immediately preceding result of a game of certain sports as the authentication data. In this case, the first authentication data encryption unit 125 may be configured to generate the authentication data from external information. The authentication data may be supplied according to necessity from, for example, the main control unit 122 that generates the authentication data. Although not limited to this, in this embodiment, it is assumed that the first authentication data encryption unit 125 is configured to generate the authentication data based on time when the first authentication data encryption unit 125 is about to perform encryption and temperature in Asakusa, Tokyo at that time.

The first encryption decryption unit 126 performs at least one of encryption processing and decryption processing, and is configured to perform both of the encryption processing and the decryption processing in this embodiment, although not limited to this.

The first encryption decryption unit 126 performs the encryption processing and the decryption processing only when there is permission that encryption and decryption may be performed from the main control unit 122.

Although details of the method of encryption are described later, when performing encryption, the first encryption decryption unit 126 sends an instruction to generate a solution to the first solution generation unit 123. The first solution generation unit 123 generates a solution based on the instruction, and sends it to the first encryption decryption unit 126. The solution is used for encryption in the first encryption decryption unit 126. Although not limited to this, data encrypted in this embodiment is data of banking information generated with the input device 102. Although the banking information generated with the input device 102 is plaintext data, this becomes encrypted data as a result of encryption by the first encryption decryption unit 126. The encrypted data generated by the first encryption decryption unit 126 is configured to be sent to the output unit 127.

Although details of the method of decryption are described later, when performing decryption, the first encryption decryption unit 126 sends an instruction to generate a solution to the first solution generation unit 123. The first solution generation unit 123 generates a solution based on the instruction, and sends it to the first encryption decryption unit 126. The solution is used for decryption in the first encryption decryption unit 126. Although not limited to this, data decrypted in this embodiment is data of banking information (described later) sent from the server 200. Although the banking information sent from the server 200 is in the state of encrypted data, it becomes plaintext data of the banking information as a result of decryption by the first encryption decryption unit 126. The plaintext decrypted data generated by the first encryption decryption unit 126 is configured to be sent to the output unit 127.

The output unit 127 outputs the data generated by the functional blocks in the client 100 to the interface 114.

As described above, the identification information may be sent to the output unit 127 from the main control unit 122. On the other hand, there are cases where the encrypted authentication data, which is encrypted data of the authentication data, generated by the first authentication data encryption unit 125 by using the solution generated by the first solution generation unit 123 based on an instruction to generate a solution from the main control unit 122 is sent to the output unit 127 from the first authentication data encryption unit 125. The output unit 127 outputs such identification information and encrypted authentication data to the interface 114. This identification information and encrypted authentication data are configured to be sent from the interface 114 to the transmission and reception mechanism, and are sent to the server 200 via the network 400 from the transmission and reception mechanism. When such transmission of the identification information and the encrypted authentication data to the server 200 is performed, as long as the identification information and the encrypted authentication data are transmitted in the state where it is possible for the server 200 to understand that they are associated with each other, it is not necessarily required that both are collectively sent or are sent at the same time. However, in this embodiment, by collectively sending both or sending both at the same time, the server 200 is configured to be able to understand that the identification information and the encrypted authentication data are associated with each other.

The encrypted data may also be sent to the output unit 127 from the first encryption decryption unit 126. When the encrypted data is received, the output unit 127 outputs the encrypted data to the interface 114. This encrypted data is configured to be sent from the interface 114 to the transmission and reception mechanism, and to be sent from the transmission and reception mechanism to the server 200 via the network 400.

The plaintext data of the banking information may also be sent from the first encryption decryption unit 126 to the output unit 127. This banking information is originally generated by the server 200. When such data of the banking information is received, the output unit 127 outputs the data of the banking information to the interface 114. The data of the banking information is sent to the display 101, and the display 101 that received it performs display according to the banking information.

Next, the configuration of the server 200 is described.

When seen as hardware, the server 200 may be an existing known or well-known server. Additionally, its hardware configuration may also be a general configuration, and in broad terms, it is possible to follow the hardware configuration of the client 100 in which the CPU 111, the ROM 112, the RAM 113, and the interface 114 are connected by the bus 116. However, usually, the server 200 will generally include a large-capacity recording device such as a HDD.

The configurations and functions of a CPU, a ROM, a RAM, an interface, a bus, and the large-capacity recording device included in the server 200 are not different from the configurations and functions of those in the client 100. Additionally, the interface included in the server 200 is connected to the transmission and reception mechanism for performing communication with equipment other than the server 200 via the network 400, similar to the transmission and reception mechanism included in the client 100. Although the interface included in the server 200 may be connected to a display and an input device similar to those included in the client 100, a description thereof is omitted since it is less relevant to the present application.

By executing the computer program recorded in the ROM, the large-capacity recording device, etc. inside the server 200, the functional blocks as described below are generated inside the server 200. Although the following functional blocks may be generated by the function of the computer program alone for causing the server 200 to function as the reception device in the present invention, the following functional blocks may be generated by the cooperation of such a computer program and a computer program such as an OS installed in the server 200. Additionally, although the above-described computer program may be pre-installed in the server 200, or the computer program may be installed in the server 200 after shipping. In that case, installation of the above-described computer program to the server 200 may be performed via a predetermined recording medium such as a memory card, or may be performed via a network such as a LAN or the Internet. These circumstances are the same as those in the case of the client 100.

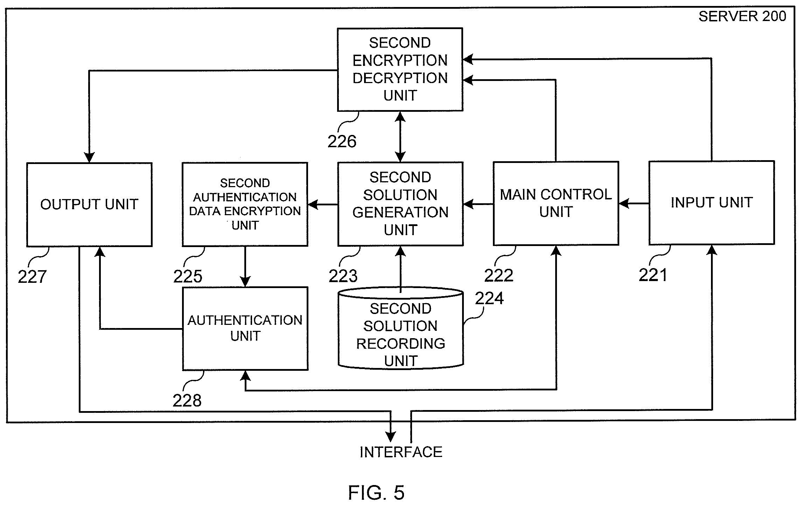

In relationship with the functions of the present invention, an input unit 221, a main control unit 222, a second solution generation unit 223, a second solution recording unit 224, a second authentication data encryption unit 225, a second encryption decryption unit 226, an output unit 227, and an authentication unit 228 are generated in the server 200 (FIG. 5).

The input unit 221 receives an input from an interface.

The input from the interface includes, for example, banking information, etc., which is information about whether the settlement asked by a user in the Internet banking is approved, etc. The banking information is input from, for example, another device other than the server 200 performing the Internet banking, and is input to the input unit 221 via the interface. However, when it is the server 200 itself that performs the Internet banking, such banking information may be input to the input unit 221 from a functional block that performs the Internet banking in the server 200 without using the interface and generates banking information, and that is not shown.

The input unit 221 may receive data of the identification information and encrypted authentication data from the interface. The data of the identification information and the encrypted authentication data is sent from the client 100 via the network 400, and is received by the server 200 with its transmission and reception mechanism. When the identification information and the encrypted authentication data are received, the input unit 221 is configured to send them to the main control unit 222.

Similarly, the input unit 221 may receive the encrypted data via the interface that is sent from the client 100 via the network 400, and is received by the server 200 with its transmission and reception mechanism. When such encrypted data is received from the interface, the input unit 221 is configured to send it to the second encryption decryption unit 226.

The main control unit 222 controls the entire functional blocks generated inside the server 200.

The main control unit 222 may receive the data of the encrypted authentication data and the identification information from the input unit 221. When these data are received, the main control unit 222 is configured to send the encrypted authentication data to the authentication unit 228, and to send an instruction to generate a solution in addition to the identification information to the second solution generation unit 223.

Additionally, the main control unit 222 may receive authentication data described later. When such authentication data is received, the main control unit 222 is configured to give, to the second encryption decryption unit 226, permission that the encrypted data sent from the client 100 that transmitted the authentication data encryption data, which triggers the authentication unit 228 to generate such authentication data, may be decrypted.

The second solution generation unit 223 generates a solution, when the instruction to generate a solution is received.

Although the second solution generation unit 223 may receive the instruction to generate a solution from the main control unit 222, the second solution generation unit 223 may receive the instruction from the second encryption decryption unit 226 as described later.

Although the method of generating a solution is described later, it is assumed that the generation of the solution performed by the second solution generation unit 223 is performed by the same method as the generation of the solution performed by the first solution generation unit 123 of the client 100.

At least when generating the first solution, the second solution generation unit 223 also uses the data of the initial solution recorded in the second solution recording unit 224, as in the first solution generation unit 123 that uses the data of the same initial solution recorded in the first solution recording unit 124. The data of the initial solution recorded in the second solution recording unit 224 is basically the same as that recorded in the first solution recording unit 124.

However, the second solution generation unit 223 needs to generate a different solution for the user who operates each client 100 for authenticating the user who operates each client 100. Accordingly, at least in the initial state (the state where the second solution generation unit 223 has not generated a solution for any of users), the data of the initial solution for each user as many as the number of the users is recorded in the second solution recording unit 224. In this embodiment, the data of the initial solution is recorded in the second solution recording unit 224 by being associated with the identification information of each user. The initial solution recorded in the second solution recording unit 224 and associated with each identification information is configured to be the same as the initial solution recorded in the first solution recording unit 124 of the client 100 that is expected to be used by the user specified by the identification information associated with the initial solution.

The second solution generation unit 223 receives the instruction to generate a solution and the identification information from the main control unit 222 as described above. When such an instruction is received, at least in the case of generating the first solution, the second solution generation unit 223 is configured to read the data of the initial solution associated with the identification information the same as the identification information received with the instruction, and to generate a solution by using the read initial solution. Accordingly, the second solution generation unit 223 is configured to be able to generate the same solution as the solution generated by each first solution generation unit 123.

On the other hand, also in the case where the encrypted data sent from the client 100 is received, as in the above-described case, the second solution generation unit 223 generates the solution for the user who operates the client 100 by using the solution for the user who operates the client 100.

When the instruction to generate a solution is received from the main control unit 222, the second solution generation unit 223 is configured to send the generated solution to the second authentication data encryption unit 225, and when a similar instruction is received from the second encryption decryption unit 226, the second solution generation unit 223 is configured to send the generated solution to the second encryption decryption unit 226.

The second authentication data encryption unit 225 encrypts the authentication data by using the solution. In other words, the second authentication data encryption unit 225 encrypts the authentication data to generate encrypted authentication data. A method of encrypting the authentication data by using a solution by the second authentication data encryption unit 225 is the same as the method of encrypting the authentication data by using a solution to obtain encrypted authentication data by the first authentication data encryption unit 125 of the client 100.

When the second authentication data encryption unit 225 generates the encrypted authentication data from the authentication data by using the solution, the second authentication data encryption unit 225 is configured to send the encrypted authentication data to the authentication unit 228.

Note that, since the second authentication data encryption unit 225 encrypts the authentication data, the second authentication data encryption unit 225 requires the authentication data. As described above, the authentication data is shared by the client 100 and the server 200 and may be fixed data that does not change or may be data that changes over time. In this embodiment, the first authentication data encryption unit 125 is configured to generate the authentication data based on time when the first authentication data encryption unit 125 is about to perform encryption and temperature in Asakusa, Tokyo at that time. Therefore, although not limited to this, the second authentication data encryption unit 225 in this embodiment is configured to generate the authentication data based on time when the second authentication data encryption unit 225 is about to perform encryption and temperature in Asakusa, Tokyo at the time. The authentication data is configured to be the same as the authentication data generated by the first authentication data encryption unit 125 of the client 100.

The authentication unit 228 authenticates whether or not the client 100 that sent the encrypted authentication data to the server 200 is proper.

As described above, the authentication unit 228 receives the encrypted authentication data, more particularly, the encrypted authentication data generated by the client 100, from the main control unit 222. On the other hand, the authentication unit 228 receives the encrypted authentication data, more particularly, the encrypted authentication data generated by the server 200, from the second authentication data encryption unit 225. The authentication unit 228 compares these two encrypted authentication data, and when both match, the authentication unit 228 authenticates that the client 100 that sent the encrypted authentication data is proper, and when both do not match, the authentication unit 228 does not authenticate that the client 100 that sent the encrypted authentication data is proper.

When the authentication is performed, the authentication unit 228 generates authentication data, which is data indicating that the authentication was performed on the client 100, and sends it to the main control unit 222 and the output unit 227.

The second encryption decryption unit 226 performs at least one of encryption processing and decryption processing, and is configured to perform both of the encryption processing and the decryption processing in this embodiment, although not limited to this. Further, when the first encryption decryption unit 126 of the client 100 only performs encryption, the second encryption decryption unit 226 can perform only decryption, and when the first encryption decryption unit 126 only performs decryption, the second encryption decryption unit 226 can perform only encryption.

The second encryption decryption unit 226 performs the encryption processing and the decryption processing only when there is permission that the encryption and the decryption may be performed from the main control unit 222.

The method of encryption and the method of decryption performed in the second encryption decryption unit 226 are equal to the methods of encryption and decryption performed in the first encryption decryption unit 126 of the client 100.

Although details of the method of encryption are described later, when performing encryption, the second encryption decryption unit 226 sends an instruction to generate a solution to the second solution generation unit 223. The second solution generation unit 223 generates a solution based on the instruction, and sends it to the second encryption decryption unit 226. The solution is used for encryption in the second encryption decryption unit 226. Although not limited to this, the data encrypted in this embodiment is the data of the banking information that is input from the interface. Although the banking information is plaintext data, it becomes encrypted data as a result of encryption by the second encryption decryption unit 226. The encrypted data generated by the second encryption decryption unit 226 is configured to be sent to the output unit 227.

Although details of the method of decryption are described later, when performing decryption, the second encryption decryption unit 226 sends an instruction to generate a solution to the second solution generation unit 223. The second solution generation unit 223 generates a solution based on the instruction, and sends it to the second encryption decryption unit 226. The solution is used for decryption in the second encryption decryption unit 226. Although not limited to this, the data decrypted in this embodiment is the encrypted data based on the banking information sent from the client 100. As a result of decryption of the encrypted data by the second encryption decryption unit 226, it becomes plaintext data of the banking information. The plaintext decrypted data generated by the second encryption decryption unit 226 is configured to be sent to the output unit 227.

The output unit 227 outputs the data generated by the functional blocks in the server 200 to the interface.

As described above, the authentication data may be sent from the authentication unit 228 to the output unit 227. When the output unit 227 receives the authentication data, the output unit 227 outputs it to the interface. This authentication data is configured to be sent from the interface to the transmission and reception mechanism, and to be sent from the transmission and reception mechanism to the client 100 via the network 400.

The encrypted data may also be sent from the second encryption decryption unit 226 to the output unit 227. When the encrypted data is received, the output unit 227 outputs the encrypted data to the interface. This encrypted data is configured to be sent from the interface to the transmission and reception mechanism, and to be sent from the transmission and reception mechanism to the client 100 via the network 400.

The plaintext data of the banking information may also be sent from the second encryption decryption unit 226 to the output unit 227. This banking information is originally generated by the client 100. When such data of the banking information is received, the output unit 227 outputs the data of the banking information to the interface. The data of banking information is sent from the interface to other device that performs processing of the Internet banking. However, when other functional blocks in the server 200 perform Internet banking processing, the banking information will be sent to the functional blocks, which are not shown, without passing through the interface.

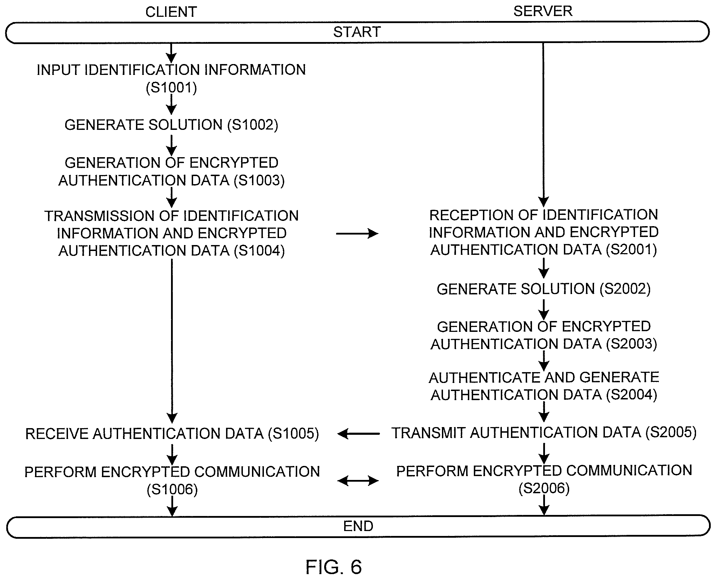

Next, referring to FIG. 6, the usage and operation of the above-described communication system are described.

The user who is going to utilize the Internet banking first operates the input device 102 of the client 100 owned by the user, and launches a browser. The functions of the browser depend on a known or well-known computer program usually included in the client 100. The browser is displayed on the display 101 of the client 100.

The user inputs the URL of the server 200 providing the Internet banking to an address bar of the browser. Accordingly, the homepage of the Internet banking is displayed on the browser.

Here, the user inputs a user ID, which is the identification information (S1001). A known or well-known display to prompt the input of the user ID may be made in the homepage of the Internet banking in this state, so as to prompt the user to input the user ID. The user operates the input device 102 to input the identification information. The input data of the identification information is sent to the input unit 121 via the interface 114, and is sent from the input unit 121 to the main control unit 122.

When the identification information is received, the main control unit 122 sends the identification information to the output unit 127, and sends an instruction to generate a solution to the first solution generation unit 123. When such an instruction is received, the first solution generation unit 123 generates a solution (S1002).

Although any kind of method of generating a solution may be used, in this embodiment, the technology of time synchronization in the conventional technology of one-time password is applied, although not limited to this. An example of the generation method of a solution is described below.

The first solution generation unit 123 in this embodiment reads the data of the initial solution recorded in the first solution recording unit 124, when generating a solution for the first time (note that, in this embodiment, the initial solution is always used whenever generating a solution, in addition to the first time). It is assumed that the data of the initial solution is, for example, a character string including a 20 digit number and lower-case alphabetical characters. Such an initial solution is unique to each client 100, and the server 200 or an administrator of the server 200 assigns the initial solution to each client 100. Although there may be one initial solution, it is assumed that there are five initial solutions in this embodiment. The first solution generation unit 123 reads all of the five initial solutions.

The first solution generation unit 123 performs calculation on these initial solutions, thereby generating the solution at the time. First, the initial solution is converted into numbers only, so that calculation is possible. When an alphabetical character is included in the initial solution, it is replaced with a double digit number. The number to be replaced is the order of the alphabetical character in the alphabet. For example, "a" is replaced with "01", "b" is replaced with "02", and "z" is replaced with "26", respectively. For example, supposed the initial solution is "5a6458p6556ff4272149." In this case, when the initial solution is converted into numbers only according to the above-described rule, it becomes "501645816655606064272149". The number of digits in the case of conversion into numbers only will be increased according to the number of alphabetical characters included in the initial solution. Further, when it is desired to also include signs such as (, ), !, &, and : in the solution, suitable numbers such as "27", "28", and "29" may be assigned to "(", ")", and "!", respectively.

Next, calculation is performed on numbers. A sequence of numbers that serves as the origin of a solution is obtained as a result of this calculation. When it is assumed that the sequence of numbers is X, X can be obtained as follows according to the year of A.D., the month, the day, the hour, and the minute at the time. $X_1$, $X_2$, $X_3$, $X_4$, and $X_5$ in the following formula are obtained by converting the five initial solutions to numbers, respectively. The reason for using the five initial solutions in this embodiment is that a solution is changed according to the five elements, i.e., the year of A.D., the month, the day, the hour, and the minute.

$$X = X_1{}^P + X_2{}^Q + X_3{}^R + X_4{}^S + X_5{}^T$$

Here, P = the value obtained by adding 1 to the remainder obtained by dividing the number of the year of A.D. by 5, Q = the value obtained by adding 1 to the remainder obtained by dividing the number of the month by 5, R = the value obtained by adding 1 to the remainder obtained by dividing the number of the day by 5, S = the value obtained by adding 1 to the remainder obtained by dividing the number of the hour by 5, and T = the value obtained by adding 1 to the remainder obtained by dividing the number of the minute by 5. In this manner, a different sequence of numbers can be obtained according to the time at that moment. Further, when all of P to T incidentally become 0, the solution X eventually obtained is 5, but in order to avoid the frequent occurrence of such a simple number, a process of adding 1 in all of P to T is added.

In addition, for example, when the formula as follows is used, just one initial solution to be used is needed.

$$X = X_1{}^P X_1{}^Q + X_1{}^R X_1{}^S + X_1{}^T$$

As a result of performing the above-described calculation, the sequence of numbers X, which serves as the origin of a solution, is obtained. Then, if the number of 01 to 26 is included in arbitrary double digits in the sequence of numbers, according to the opposite rule of the aforementioned rule of replacing alphabetical characters into numbers, these numbers are replaced with alphabetical characters of a to z.

The character string including numbers and lower-case alphabetical characters thus obtained is a number having 20 digits or more. When it is 20 or more digits, for example, the first 20 characters are extracted from the character string, and it is used as a solution. When the character string including numbers and lower-case alphabetical characters obtained as described above is exactly 20 digits, it is used as a solution as it is. Additionally, when the character string including numbers and lower-case alphabetical characters obtained as described above is less than 20 digits, the number of digits is increased based on a certain regulation. For example, based on the first number or alphabetical character of the character string, a certain number or character may be inserted into the character string until the number of digits reaches 20. Alternatively, a method may be adopted that repeats an operation of generating a new character string including numbers and lower-case alphabetical characters by performing the above-described process of replacing numbers with alphabetical characters with respect to the sequence of numbers obtained by performing the calculation by substituting P with T in the above-described formula, and joining the new character string to the original character string including numbers and lower-case alphabetical characters until the number of digits becomes at least 20, and the first 20 characters are extracted and used as a solution.

In any case, accordingly, the solution corresponding to the day and time at the time is generated.

The first solution generation unit 123 sends the generated solution to the first authentication data encryption unit 125.

When receiving the solution from the first solution generation unit 123, the first authentication data encryption unit 125 encrypts the authentication data by using the received solution to generate encrypted authentication data (S1003).

A method of encrypting the authentication data by using a solution to generate the encrypted authentication data by the first authentication data encryption unit 125 may be any method and does not need to be always the same. However, in this embodiment, it is assumed that the method is always the same. Although not limited to this, the first authentication data encryption unit 125 encrypts the authentication data with a method of encryption of the common key system according to a predetermined algorithm by using, as a key, the solution received from the first solution generation unit 123.

In any case, when the first authentication data encryption unit 125 generates encrypted authentication data from authentication data, the first authentication data encryption unit 125 sends the encrypted authentication data to the output unit 127.

As described above, the output unit 127 receives the identification information from the main control unit 122, and receives the encrypted authentication data from the first authentication data encryption unit 125. The output unit 127 that received them sends these data to the interface 114, so as to collectively send the encrypted authentication data and the identification information to the server 200 at the same time.

These data are sent from the interface 114 to the transmission and reception mechanism, and after a header, etc. is attached to these data by the transmission and reception mechanism according to a technology used in the usual Internet communication, these data are sent from the transmission and reception mechanism to the server 200 via the network 400 (S1004).

The server 200 receives, with its transmission and reception mechanism, the data of the encrypted authentication data and the identification information that are sent from the client 100 (S2001). More specifically, the server 200 collectively receives, with its transmission and reception mechanism, the encrypted authentication data and the identification information at the same time that are sent from the client 100.

They are sent to the interface of the server 200, and are sent from the interface to the input unit 221. When the data of the encrypted authentication data and the identification information is received from the interface, the input unit 221 sends them to the main control unit 222.

When the data of the encrypted authentication data and the identification information is received from the input unit 221, the main control unit 222 sends the encrypted authentication data to the authentication unit 228, and sends the identification information and an instruction to generate a solution to the second solution generation unit 223.

When the instruction to generate a solution is received with the identification information, the second solution generation unit 223 generates a solution (S2002).

The second solution generation unit 223 reads the initial solution corresponding to the received identification information from the second solution recording unit 224. The initial solution associated with the identification information is the same as the initial solution recorded in the first solution recording unit 124 of the client 100 that sent the identification information.

The method of generating a solution by the second solution generation unit 223 is the same as the method of generating a solution by the first solution generation unit 123 of the client 100. Accordingly, the solution generated by the second solution generation unit 223 basically becomes the same as the solution generated by the first solution generation unit 223.

However, in the case where the time at which the solution is generated by the first solution generation unit 123 is exactly when the minute is changed, etc., the solution generated by the second solution generation unit 223 may be different from the solution generated by the first solution generation unit 223. In that case, since it becomes impossible to perform authentication by the encrypted authentication data in the first place, even if the client 100 is proper, the second solution generation unit 223 in this embodiment is configured to also generate a solution corresponding to the time one minute before the time at that time, although not limited to this. With this manner, when the solution is generated by the second solution generation unit 223 within one minute after the solution is generated by the first solution generation unit 123, one of the two solutions generated by the second solution generation unit 223 matches the solution generated by the first solution generation unit 123. With a computation ability of the present computer, the authentication by the authentication unit 228 described below can be performed without a problem if a time margin of this degree is anticipated.

The second solution generation unit 223 sends the generated solution to the second authentication data encryption unit 225.

When receiving the two solutions, the second authentication data encryption unit 225 encrypts the authentication data to obtain encrypted authentication data by using these two solutions (S2003). A method of generating the encrypted authentication data by using a solution by the second authentication data encryption unit 225 is the same as the method of encrypting the authentication data by using a solution by the first authentication data encryption unit 125 of the client 100. That is, when receiving the two solutions, the second authentication data encryption unit 225 in this embodiment encrypts the authentication data by performing, by using the two solutions respectively as keys, the encryption of the common key system according to a predetermined algorithm (this is the same as the algorithm used in the first authentication data encryption unit 125). As a result, in this embodiment, two encrypted authentication data encrypted by different keys are generated from one authentication data.

When the second authentication data encryption unit 225 encrypts the authentication data by using the solutions to generate the encrypted authentication data, the second authentication data encryption unit 225 sends those two encrypted authentication data to the authentication unit 228.

The authentication unit 228 receives the encrypted authentication data generated by the client 100 from the main control unit 222, and receives the two encrypted authentication data generated by the server 200 from the second authentication data encryption unit 225, respectively.

The authentication unit 228 performs authentication by using these encrypted authentication data (S2004).

The authentication unit 228 compares the encrypted authentication data generated by the client 100 with the two encrypted authentication data generated by the server 200, and when the former matches one of the latters, the authentication unit 228 authenticates that the client 100 that sent the encrypted authentication data is proper, and when the former does not match any one of the latters, the authentication unit 228 does not authenticates that the client 100 that sent the encrypted authentication data is proper.

When the authentication is performed, the authentication unit 228 generates the authentication data, which is data indicating that the authentication is performed on the client 100, and sends it to the main control unit 222 and the output unit 227. When the authentication is not performed, the communication between the client 100 and the server 200 is terminated there. The user operates the client 100 to return again to the processing of inputting the identification information, which is the user ID.

Further, the second solution generation unit 223 may make only one solution as described above. In that case, the second authentication data encryption unit 225 also generates only one encrypted authentication data. In this case, the authentication unit 228 compares the encrypted authentication data generated by the client 100 with the one encrypted authentication data generated by the server 200, and when the former matches the latter, the authentication unit 228 performs authentication.

Note that, in general, an encryption technology presupposes that both encryption and decryption can be performed.. That is, encryption is based on the premise not only that plaintext data is converted into encrypted data but also that encrypted data is returned to original plaintext data. In other words, the encryption technology realizes reversible conversion of a pair of encryption and decryption. However, both the two data used for authentication by the authentication unit 228 in this embodiment are encrypted authentication data (encrypted data) and do not need to be decrypted. Therefore, encryption performed by the first authentication data encryption unit 125 (or the first authentication data encryption means) and the second authentication data encryption unit 225 (or the second authentication data encryption means) in this embodiment, furthermore, in the case of the first invention of this application may be data conversion not based on reversible data conversion. For example, the first authentication data encryption unit 125 (or the first authentication data encryption means) and the second authentication data encryption unit 225 (or the second authentication data encryption means) may generate encrypted authentication data as a hash value obtained by hashing the authentication data by using an appropriate hash function and may change the hash function as appropriate by using a solution. "Encryption" in the first invention of this application includes encryption for performing such irreversible conversion.

The authentication data is sent to the output unit 227 as described above. When the authentication data is received, the output unit 227 outputs it to the interface. This authentication data is sent from the interface to the transmission and reception mechanism, and is sent from the transmission and reception mechanism to the client 100 via the network 400 (S2005).

The client 100 receives the authentication data sent from the server 200. More specifically, the client 100 receives the authentication data with its transmission and reception mechanism (S1005).

The authentication data is sent to the input unit 121 through the interface 114 from the transmission and reception mechanism. The input unit 121 sends the authentication data to the main control unit 122. The main control unit 122 that received the authentication data gives an instruction that encryption and decryption may be performed to the first encryption decryption unit 126. Accordingly, preparation for encrypted communication is completed in the client 100.

On the other hand, the authentication data is also sent to the main control unit 222 of the server 200 as described above. When the main control unit 222 receives the authentication data, the main control unit 222 sends, to the second encryption decryption unit 226, data of permission to perform encryption processing and decryption processing in order to perform communication with the client 100 on which the authentication was previously performed. Accordingly, preparation for encrypted communication is completed also in the server 200.

In this state, encrypted communication is performed between the client 100 and the server 200 (S1006, 2006).

First, the case is described where encrypted data is transmitted from the client 100 to the server 200.

Note that, as for the transmission of encrypted data from the client 100 to the server 200, and the transmission of encrypted data from the server 200 to the client 100 described later, it does not matter which of these transmissions is performed first. Rather, both of these transmissions are performed as needed. Additionally, as for the generation of a new solution in the first solution generation unit 123 described later, and the generation of a new solution in the second solution generation unit 223, it also does not matter which of these generations is performed first. The generation of a new solution performed in both of the client 100 and the server 200 is independently performed.

The user operates the input device 102 of the client 100 to input banking information. The banking information is, for example, indication of intention to check the balance, information specifying a bank account for which the balance is to be checked, indication of intention to perform money transfer to another account, information specifying the amount of money to be transferred, information specifying an account to which money is to be transferred, etc. Although the banking information about these is generated by operating the input device 102, the data of the banking information is plaintext data.

The data of the banking information is sent from the interface 114 to the input unit 121, and is further sent to the first encryption decryption unit 126. The data of the banking information is encrypted, and a solution is used for the encryption. The first encryption decryption unit 126 sends an instruction to generate a solution to the first solution generation unit 123, so as to cause the first solution generation unit 123 to generate a solution. When such an instruction is received, the first solution generation unit 123 newly generates a solution.

As long as the generated solution is synchronized with the solution generated by the second solution generation unit 223 of the server 200, it does not matter how the first solution generation unit 123 generates the solution. However, for example, in this embodiment, it is assumed that, irrespective of the time at the time, a solution is generated that corresponds to the time after one year, one month, one day,

one hour, or one minute from the time at which the solution that is previously generated and used for authentication.

The first solution generation unit 123 generates a new solution by using the initial solution that is previously used, and by using the above-described method.

The new solution is sent from the first solution generation unit 123 to the first encryption decryption unit 126.

The first encryption decryption unit 126 receives the new solution from the first solution generation unit 123, and uses it to encrypt the data of the banking information.

The solution in this case can be used in a free manner. For example, in the case where the client 100 and the server 200 perform a common key system encrypted communication, the first encryption decryption unit 126 can use the new solution as a common key. That is, the solution can be utilized as a key for encryption. On the other hand, the solution can also be used for changing the algorithm for encryption. It is also possible to use the solution such that one algorithm is selected from a plurality of kinds of algorithms based on the solution.

In any case, the plaintext banking information is encrypted by the first encryption decryption unit 126, and is converted into encrypted data.

The generated encrypted data is sent from the first encryption decryption unit 126 to the output unit 127.

The output unit 127 sends the encrypted data to the transmission and reception mechanism via the interface 114. The encrypted data is sent to the server 200 via the network 400.

The server 200 receives the encrypted data sent from the client 100 with its transmission and reception mechanism. The encrypted data is sent from the transmission and reception mechanism to the input unit 221 via the interface. The input unit 221 sends the encrypted data to the second encryption decryption unit 226.

The second encryption decryption unit 226 that received the encrypted data decrypts the encrypted data. In order to do so, the second encryption decryption unit 226 uses the solution generated by the second solution generation unit 223. The second encryption decryption unit 226 sends an instruction to generate a solution to the second solution generation unit 223, so as to cause the second solution generation unit 223 to generate a solution. When such an instruction is received, the second solution generation unit 223 newly generates a solution.

The method of generating a solution by the second solution generation unit 223 is the same as the method adopted by the first solution generation unit 123 of the client 100. Therefore, the second solution generation unit 223 generates the new solution the same as the solution generated by the first solution generation unit 123.

The new solution is sent from the second solution generation unit 223 to the second encryption decryption unit 226.

The second encryption decryption unit 226 receives the new solution from the second solution generation unit 223, and uses it to decrypt the encrypted data.

The manner the solution is used in this case follows the manner the solution is used in the first encryption decryption unit 126 of the client 100. For example, when the client 100 and the server 200 use the solution as the common key for the common key system encrypted communication, the second encryption decryption unit 226 also uses the new solution as the common key.

In any case, the encrypted data is decrypted by the second encryption decryption unit 226, and is converted back into the original plaintext data of the banking information.

The data of the banking information is sent from the second encryption decryption unit 226 to the output unit 227, is sent from the output unit 227 to other device that performs Internet banking processing via the interface, and is suitably used.

Next, the case is described where encrypted data is transmitted from the server 200 to the client 100.

The data of the banking information is input to the server 200. The data of the banking information is created by a device other than the server 200 that performs Internet banking processing, and is input to the server 200. The banking information is, for example, information indicating the balance of a certain account, information indicating how much money was transferred to which account, past transaction history of an account, etc. The banking information about these is plaintext data at the stage of generation.

The data of the banking information is sent from the interface to the input unit 221, and is further sent to the second encryption decryption unit 226. The data of the banking information is encrypted, and a solution is used for the encryption. The solution used here may be the same as the previous solution. On the other hand, as described above, by generating a further new solution under the condition that is different from the previous condition, even in the case where the common key system communication is performed in both of the case where the encrypted data is transmitted from the server 200 to the client 100, and the case where the encrypted data is transmitted from the client 100 to the server 200, it becomes possible to perform the encrypted communication by using a different common key. Note that, in this embodiment, it is assumed that the solution to be used is the same regardless of which direction the encrypted data is transmitted.

The second encryption decryption unit 226 encrypts the banking information to convert it into encrypted data by the same method used by the first solution generation unit 123 to encrypt the banking information. The generated encrypted data is sent from the second encryption decryption unit 226 to the output unit 227.

The output unit 227 sends the encrypted data to the transmission and reception mechanism via the interface. The encrypted data is sent to the client 100 via the network 400.

The client 100 receives the encrypted data sent from the server 200 with its transmission and reception mechanism. The encrypted data is sent from the transmission and reception mechanism to the input unit 121 via the interface. The input unit 121 sends the encrypted data to the first encryption decryption unit 126.

The first encryption decryption unit 126 that received the encrypted data decrypts the encrypted data. In order to do so, the first encryption decryption unit 126 uses the solution generated by the first solution generation unit 123. The solution in this case may be the same as the new solution previously generated by the first solution generation unit 123, or when the second solution generation unit 223 of the server 200 is configured to generate a further new solution, and the second encryption decryption unit 226 is configured to perform encryption by using the further new solution, the solution in this case can also be a further new solution further generated by the first solution generation unit 123. In this embodiment, the solution used by the first encryption decryption unit 126 for decryption is the above-described new solution generated by the first solution generation unit 123.

The first encryption decryption unit 126 uses the solution as, for example, a key at the time of decryption of the encrypted data in the common key system to decrypt the encrypted data, and converts the encrypted data back to the original plaintext data of the banking information.

The data of the banking information is sent from the first encryption decryption unit 126 to the output unit 127, and is sent from the output unit 127 to the display 101 via the interface 114. Based on the banking information sent from the server 200, the balance of a user's account, how much money was transferred to a certain account, or past transaction history of the user's account, etc. are displayed on the display 101.

The encrypted communication is terminated when it becomes unnecessary to perform the encrypted communication.

Note that, in the communication system in this embodiment, only one solution or a fixed solution is used for the solution used in the processes of S1006, 2006 in which the encrypted communication is performed. Instead, in Modification 1 described later, in order to change the common key for performing the common key system encrypted communication one after another, it is also possible to successively generate the solution to be used for encryption or decryption by the first solution generation unit 123 of the client 100 and the second solution generation unit 223 of the server 200. In that case, for example, in order to generate a next new solution of the solution used for authentication, as in the case where the rule is set between the first solution generation unit 123 and the second solution generation unit 223 that the solution is generated that corresponds to the time after one year, one month, one day, one hour, or one minute from the time at which the solution used for authentication is generated, a rule may be set between the first solution generation unit 123 and the second solution generation unit 223 that the subsequent solutions to be generated are solutions that are sequentially generated at the time after one minute, two minutes, three minutes ... after that. Of course, it is also possible to exchange a more complicated rule between them.

The modification of the above-described communication system is described below.

The following modification is basically the same as the case of the above-described embodiment, except that the generation methods of solution performed by the first solution generation unit 123 in the client 100 and the second solution generation unit 223 in the server 200 are different from those in the above-described embodiment.

Further, the first solution recording unit 124 and the second solution recording unit 224 in each modification are the same as those in the above-described embodiment in that the initial solution is recorded at least in the initial state. However, as described later, in the state other than the initial state, unlike the case of the above-described embodiment, there are cases where data other than the initial solution is recorded.

Additionally, in Modification 3, the method for authentication performed by the authentication unit 228 is slightly different from that in the case of the above-described embodiment.

Each of the modifications is described below in order.

<Modification 1>

In the above-described embodiment, the first solution generation unit 123 included in the client 100 and the second solution generation unit 223 included in the server 200 adopt the method of synchronization of the solutions like time synchronization, in terms of the method of generation of one-time password. In contrast, in Modification 1, in terms of the generation of one-time password, a method is adopted that synchronized solutions based on the number of solutions generated in the past, like event synchronization. Further, also in each of Modification 2 and the subsequent modifications, in terms of the method of generation of one-time password, a method like event synchronization is adopted.

In Modification 1, a technique for generating a new solution in the first solution generation unit 123 and the second solution generation unit 223 can be, for example, a technique that successively generates solutions by repeating the processing of obtaining a solution by performing predetermined calculation on a certain initial solution, then obtaining the next solution by performing the predetermined calculation again on the solution, and then obtaining the next solution by performing the predetermined calculation again on the solution ... Such a technology is well known as the technology for generating pseudorandom numbers.

A description is given of a more specific method of generating a solution by the first solution generation unit 123 and the second solution generation unit 223.

In order to generate a solution, a method of sequentially creating new solutions by substituting a past solution to a predetermined function by using a certain initial solution (there are cases where two or more exist as in the following (a) and (c)) may be performed whenever a solution is required. By doing so, the above-described solutions can be successively generated. The solutions in this case are pseudorandom numbers having the initial solution dependency.

The following (a) to (c) are listed as examples of the function used for creating the above-described solutions. Each of the following (a) to (c) is the formula for creating $X_N$, which is the Nth solution. Additionally, P, Q, R, and S are suitable natural numbers.

(a)

$$(X_N) \ = \ (X_{N-1})^P \ + \ (X_{N-2})^Q$$

(b) $(X_N) = (X_{N-1})^P$

(c)

$$(X_N) \ = \ (X_{N-1})^P \ (X_{N-2})^Q \ (X_{N-3})^R \ (X_{N-4})^S$$

(a) uses two past solutions, and adds up the Pth power and the Qth power of them, respectively, thereby generating a new solution. Further, to be exact, when the two past solutions are used, and the Pth power and the Qth power of them are added up, the number of digits is usually increased. Therefore, in practice, a new solution is generated by extracting a suitable number of digits from the top of the obtained value, extracting a suitable number of digits from the end of the obtained value, or extracting a suitable number of digits from a suitable portion of the value, etc. In this embodiment, it is assumed that the solution is 20 digits, although not limited to this.

(b) uses one past solution, and uses a value obtained by arranging a number of digits of the Pth power of it as described above as a new solution.

(c) uses four past solutions, obtains the product of the Pth power, the Qth power, the Rth power, and the Sth power of them, respectively, and uses a value obtained by arranging a number of digits as described above as a new solution.

The above-described (a) to (c) are one example of the algorithms for generating solutions, and it is also possible to make a change to the algorithms when generating solutions, for example, to make a change such that the above-described (a) to (c) are used in order.

Note that it is possible to use the above-described technique of using the formulae (a) to (c) when the solution is constituted by numbers only. If it is desired to include a character or a sign in a solution, the technique of assigning a number to the character or the sign, which is described in the above-described embodiment, may be adopted.

In any case, the second solution generation unit 223 in the server 200 and the first solution generation unit 123 in the client 100 are configured to synchronize the solutions to be generated to each other by using the generation method of pseudorandom numbers as described above.

The first solution generation unit 123 and the second solution generation unit 223 in Modification 1 are configured to generate solutions by using the above-described algorithm (a), although not limited to this. In that case, in order to generate a new solution, at least the initial solution is required.

As in the case of the above-described embodiment, the initial solution is recorded in the first solution recording unit 124 in Modification 1, and in addition, the number of solutions generated in the past is recorded in the first solution recording unit 124. As in the case of the above-described embodiment, the initial solution the same as that recorded in the first solution recording unit 124 of the client 100 used by the user to whom the identification information is assigned is recorded in the second solution recording unit 224 in Modification 2 so as to correspond to the identification information of each user, and in addition, the number of solutions generated in the past by using the initial solution corresponding to the identification information is recorded so as to correspond to each identification information.

The case is considered where the first solution generation unit 123 in Modification 1 generates a solution. For example, suppose the first solution generation unit 123 generated three solutions in the past. Then, when generating a solution in the process of S1002 in the above-described embodiment, the first solution generation unit 123 reads the initial solution and the number 3, which is the number of the solutions generated in the past, from the first solution recording unit 124. Accordingly, using the above-described formula (a), the first solution generation unit 123 generates a first solution ($X_1$) from an initial solution (($X_0$), ($X_{-1}$)), generates a second solution by using the first solution (to be more accurate, by using ($X_1$) and ($X_0$)), and repeats it to generate a fourth solution ($X_4$). Then, the first solution generation unit 123 increases the number of solutions generated in the past that is recorded in the first solution recording unit 124 by one, and sets the number to "4". Accordingly, the solution generated by the first solution generation unit 123 next becomes a fifth solution ($X_5$).

Suppose the case where the second solution generation unit 223 in Modification 1 generates a solution, and the second solution generation unit 223 generated three solutions in the past. Then, when generating a solution in the process of S2002 in the above-described embodiment, the second solution generation unit 223 reads the initial solution associated with the identification information, and the number 3, which is the number of solutions generated in the past that is also associated with the same identification information, from the second solution recording unit 224. The subsequent method of generating the solution is the same as that in the above-described case in the first solution generation unit 123, and a 4th solution ($X_4$) is generated as a result. Then, the second solution generation unit 223 increases the number of solutions generated in the past that is recorded in the second solution recording unit 224 by one, and sets the number to "4". Accordingly, the solution generated by the second solution generation unit 223 next becomes the 5th solution ($X_5$).

As described above, by using the same initial solution and the same algorithm (formula) in the first solution generation unit 123 and the second solution generation unit 223, and by further aligning the order of generation of the solutions generated in both of them, it is possible to synchronize the solutions generated in both of them.

As long as the method of encrypting authentication data by using a solution is common between the first authentication data encryption unit 125 of the client 100 and the second authentication data encryption unit 225 of the server 200 and the authentication data is common between the client 100 and the server 200, the encrypted authentication data generated by the client 100 and the server 200 from the synchronized solutions naturally become the same. Accordingly, also in Modification 1, as long as there is no particular illegality, the authentication described in the process of S2004 in the above-described embodiment is possible.

Similarly, also in the process of performing the encrypted communication in the above-described embodiment (S1006, S2006), a new solution is generated in the state where the first solution generation unit 123 of the client 100 and the second solution generation unit 223 of the server 200 are synchronized.

In this case, for example, as for the common key for performing the common key system encrypted communication, in the client 100, it is possible to use the solution to be generated next to the solution generated in the process of S1002 as the common key, and in the server 200, it is possible to use the solution to be generated next to the solution generated in the process of S2002 as the common key, respectively. In this case, the common key may be constant while the processes of S1006 and S2006 are performed.

On the other hand, it is also possible to change the common key for performing the common key system encrypted communication one after another. For example, when encrypting certain plaintext data, generally, a certain calculation is not performed on the entire the plaintext data, but usually, a technique is used that cuts the certain plaintext data into small data by every predetermined number of bits, and thereafter performs calculation for encryption to each of the small data. For example, methods may be adopted such as changing the common key by generating a new solution every time ten of the small data are encrypted, or depending on the case, changing the common key by generating a new solution every time one of the small data is encrypted. It is easy to adopt such a technique in Modification 1 where pseudorandom numbers are continuously generated. Of course, when performing such encryption, a solution is generated and the common key is changed also by the decrypting side with the same methods as the encrypting side. Such a thing can be performed by both of the client 100 and the server 200.

Further, also in Modification 1, the solution may be used by a method other than using the solution as the common key in the case where encryption and decryption are performed. For example, it is possible to change the content of the algorithm used for the encryption according to the content of a generated solution.

In this manner, in Modification 1, for the encryption and decryption in the process of performing the encrypted communication in the above-described embodiment (S1006, S2006), it is also possible to use only one solution, and it is also possible to use a plurality of solutions. This technology is applicable both in the aforementioned embodiment and in the modification described later.

<Modification 2>

Modification 2 is hardly different from Modification 1.

The difference is the content of data recorded in the first solution recording unit 124 and the second solution recording unit 224.

Also in Modification 2, as in Modification 1, the method of synchronizing solutions by aligning the order of solutions to be generated, i.e., a method like event synchronization is adopted, in terms of the method of the generation of one-time password.

The formulae for generating solutions in Modification 2 can be the same as those in Modification 1. Additionally, as in Modification 1, the solution used in Modification 2 may be a number only, or may include a character or a sign, or both of these in addition to a number.

In Modification 1, the number of solutions generated in the past is recorded in the first solution recording unit 124 and the second solution recording unit 224, and when a new solution is generated, the solution is generated by repeating the calculation until the solution of the desired order is generated from the initial solution. Instead, in Modification 2, the solution generated immediately before is recorded in the first solution recording unit 124 and the second solution recording unit 224.

A specific description is given. It is assumed that the formula (a) is used also in Modification 2, although not limited to this.

In the initial state, as in the case of the above-described embodiment, the initial solution $((X_0), (X_{-1}))$ is recorded in the first solution recording unit 124 in Modification 2. In the initial state, as in the case of the above-described embodiment, the same initial solution $((X_0), (X_{-1}))$ as that recorded in the first solution recording unit 124 of the client 100 used by the user to whom the identification information is assigned is recorded in the second solution recording unit 224 in Modification 2 so as to correspond to the identification information of each user.

The case is described where the first solution generation unit 123 in Modification 2 generates a solution. When the first solution generation unit 123 generates a first solution in the process of S1002, the initial solution $((X_0), (X_{-1}))$ is substituted in the formula (a). By doing so, $(X_1)$, which is the first solution, can be obtained. When the first solution is calculated, the first solution generation unit 123 overwrites $(X_{-1})$, which is the older one of the initial solutions recorded in the first solution recording unit 124, with $(X_0)$, and overwrites $(X_0)$, which is the newer one of the initial solutions recorded in the first solution recording unit 124, with $(X_1)$, which is the newly generated solution.

In the subsequent processing, when performing the process of S1002 or S1006 in the above-described embodiment, it is necessary for the first solution generation unit 123 to generate a new solution. However, in any case, in order to generate a new solution, the first solution generation unit 123 uses the solution that is generated immediately before that, and is recorded in the first solution recording unit 124. For example, when generating $(X_2)$, which is a second solution, since $(X_0)$ and $(X_1)$ are recorded in the first solution recording unit 124, the second solution $(X_2)$ is obtained by reading them from the first solution recording unit 124, and substituting them in the formula (a). Then, $(X_0)$ and $(X_1)$ in the first solution recording unit 124 are overwritten with $(X_1)$ and $(X_2)$, respectively. Similarly, a third solution $(X_3)$ is obtained, and $(X_1)$ and $(X_2)$ in the first solution recording unit 124 are overwritten with $(X_2)$ and $(X_3)$, respectively. In general terms, the first solution generation unit 123 obtains the Nth solution $(X_N)$ by using $(X_{N-1})$ and $(X_{N-2})$, and overwrites $(X_{N-1})$ and $(X_{N-2})$, which are the solutions recorded in the first solution recording unit 124, with $(X_N)$ and $(X_{N-1})$, respectively. By using these two new solutions $(X_N)$ and $(X_{N-1})$, it is possible to generate the N+1th solution $(X_{N+1})$ in the next place.

The generation method of solution in the second solution generation unit 223 is also as described above. However, the solution to be overwritten is only the solution associated with the identification information used as the trigger for creating a new solution, in other words, the past solution used for creating the new solution.

Also in this manner, by using the same initial solution and the same algorithm (formula) in the first solution generation unit 123 and the second solution generation unit 223, it is further possible to align the order of the generated solutions of the solutions generated by both of them, and as a result, it is possible to synchronize the solutions generated by both of them.

As long as the method of encrypting authentication data by using a solution is common between the first authentication data encryption unit 125 of the client 100 and the second authentication data encryption unit 225 of the server 200 and the authentication data is common between the client 100 and the server 200, the encrypted authentication data generated by the client 100 and the server 200 from the synchronized solutions naturally become the same. Accordingly, also in Modification 2, as long as there is no particular illegality, the authentication described in the process of S2004 in the above-described embodiment is possible.

<Modification 3>

Modification 3 is almost the same as Modification 2.

Also in Modification 3, as in Modification 2, the method of synchronizing solutions by aligning the order of solutions to be generated, i.e., a method like event synchronization is adopted, in terms of the method of the generation of one-time password.

The formulae for generating solutions in Modification 3 can be the same as those in Modification 2. Additionally, as in Modification 2, the solution used in Modification 3 may be a number only, or may include a character or a sign, or both of these in addition to a number.

Also in Modification 3, as in the case of Modification 2, the solution generated immediately before is recorded in the first solution recording unit 124 of the client 100, and the second solution recording unit 224 of the server 200. Additionally, as in the case of Modification 2, the first solution generation unit 123 of the client 100, and the second solution generation unit 223 of the server 200 are both configured to generate the next solutions by using the solutions recorded immediately before in the first solution recording unit 124 or the second solution recording unit 224.

A description is given of how to generate solutions in the first solution generation unit 123 and the second solution generation unit 223 at the time of performing authentication. What is characteristic in the case of Modification 3 is that the solution generated by the first solution generation unit 123 and the solution generated by the second solution generation unit 223, which are always synchronized in Modification 1 and Modification 2, are in the state where the synchronization is not achieved depending on the case. For example, suppose the client 100 in Modification 3 performs authentication also when performing communication with other communication device other than the server 200. If so, the client 100 will be in the state where the solution that is not yet generated in the server 200 is generated before the server 200. It is the following method performed by the communication system in Modification 3 that makes authentication possible even when such a thing is expected.

When authentication is performed, in the client 100, the first solution generation unit 123 generates a solution in the process of S1002 in the above-described embodiment. The method of generating a solution in this case is the same as that in the case of Modification 2.

In the first authentication data encryption unit 125 of the client 100, as in the case of the embodiment, encrypted authentication data is generated by encrypting the authentication data by using this solution (S1003). This encrypted authentication data is transmitted to the server 200 together with the identification information (S1004).

On the other hand, when the server 200 receives the identification information and the encrypted authentication data (S2001), the server 200 generates a solution as in the case of the above-described embodiment (S2002). On this occasion, the server 200 is configured to generate a plurality of solutions, more specifically, a large number of solutions. It is because, in Modification 3, the solution generated by the client 100 can precede the solution generated by the server 200. Although the method itself of generating a solution by the second solution generation unit 223 of the server 200 is the same as that in the case of Modification 2, the second solution generation unit 223 generates the next solution by using the solution that is generated in the past and is recorded in the second solution recording unit 224 at the time. Then, a large number of solutions, for example, tens of thousands of solutions, are generated by repeating the processing of using the solution generated in such a manner to generate a further next solution, and using the solution generated in such a manner to generate a further next solution ... How many solutions are generated is determined from the viewpoints of whether the authentication unit 228 of the server 200 can perform authentication by the method as described later, and how much it is desired to eliminate the possibility that the solution identical with the solution generated by the first solution generation unit 123 that is used for generating the encrypted authentication data (or used in encrypting the authentication data) by the client 100. However, if the solution is 20 digits including alphabetical characters and numbers, even when tens of thousands of solutions are generated, the possibility that the solution generated by the server 200 and the solution generated by the client 100 match by coincidence is extremely close to 0.

Then, a large number of solutions generated by the second solution generation unit 223 are sequentially sent to the second authentication data encryption unit 225, authentication data are encrypted and encrypted authentication data are generated one after another by using the large number of solutions (S2003).

The generated encrypted authentication data is sent to the authentication unit 228 in order. As in the case of the above-described embodiment, the encrypted authentication data sent from the client 100 are sent to the authentication unit 228. The authentication unit 228 compares the encrypted authentication data sent from the client 100 with the large number of encrypted authentication data sent from the second authentication data encryption unit 225, and when one of the large number of encrypted authentication data sent from the second authentication data encryption unit 225 matches the encrypted authentication data sent from the client 100, the authentication unit 228 authenticates that the client 100 that sent the encrypted authentication data is valid. On the other hand, when all of the large number of encrypted authentication data sent from the second authentication data encryption unit 225 do not match the encrypted authentication data sent from the client 100, the authentication that the client 100 that sent the encrypted authentication data is valid is not performed. Further, the authentication unit 228 may be configured to sequentially compare the encrypted authentication data sent from the client 100 with the large number of encrypted authentication data sent from the second authentication data encryption unit 225, and at the time when the encrypted authentication data sent from the client 100 matches a certain encrypted authentication data sent from the second authentication data encryption unit 225, the authentication unit 228 may be configured to perform the authentication that the client 100 that sent the encrypted authentication data is valid, and to omit the subsequent processing.

The second solution generation unit 223 in Modification 3 receives, from the authentication unit 228, the encrypted authentication data that matches the encrypted authentication data sent from the client 100, and writes the solution used for generating the encrypted authentication data to the second solution recording unit 224. Accordingly, the solution generated by the second solution generation unit 223 of the server 200 will be synchronized again with the solution generated by the first solution generation unit 123 of the client 100.

Thereafter, the client 100 and the server 200 generate solutions when performing the encrypted communication (S1006, 2006). Although the first solution generation unit 123 of the client 100 and the second solution generation unit 223 of the server 200 generate solutions, since the solutions then generated will be synchronized, the encrypted communication performed between the client 100 and the server 200 is established.

Note that, also in Modification 3, as in the case of Modification 1, it is possible to use a large number of solutions for the encryption and decryption in the process of performing the encrypted communication (S1006, S2006). However, in that case, if too many solutions are used, the number of solutions to be generated by the second solution generation unit 223 in the process of S2002 becomes too large, and the possibility that the solution generated by the first solution generation unit 123 matches the solution generated by the second solution generation unit 223 by coincidence may become high. In order to avoid such a thing, for example, the encrypted communication may be performed while generating a large number of solutions in the process of performing the encrypted communication between the client 100 and the server 200 (S1006, S2006), and eventually, at the time when the encrypted communication ends, the first solution generation unit 123 of the client 100 and the second solution generation unit 223 of the server 200 may set the data of the solutions recorded in the first solution recording unit 124 and the second solution recording unit 224 into the state before the first solution is generated in the process of performing the encrypted communication (S1006, S2006) (the state where the authentication ends, and the solution generated by the second solution generation unit 223 of the server 200 is synchronized again with the solution generated by the first solution generation unit 123 of the client 100).

This means, namely, the fact that a large number of solutions are generated in the process of performing the encrypted communication (S1006, S2006) is treated as if it never happened at least in the first solution generation unit 123 and the first solution recording unit 124 in the client 100, and the second solution generation unit 223 and the second solution recording unit 224 in the server 200. In this manner, it is possible to suppress the possibility that the number of solutions to be generated by the second solution generation unit 123 in the process of S2002 becomes too high, and the solution generated by the first solution generation unit 123 matches the solution generated by the second solution generation unit 223 by coincidence.

<Modification 4>

Modification 4 is almost the same as the first embodiment and each of the modifications in terms of the configuration and the processing to be performed. However, actually, if we focus on the point that authentication using a solution is not performed, it can be said that Modification 4 is significantly different from the first embodiment and each of the modifications. Tentatively, the following description is described as a variation of the first embodiment. However, the communication system in Modification 4 can also be variation of Modifications 1 to 3, as long as there is no particular inconsistency.

The communication system in Modification 4 is also configured by including the server 200 and a large number of clients 100 that can communicate with each other via the network 400.

The configuration of the client 100 in Modification 4 can be made the same as that described in the first embodiment, and in Modification 4, it is made so, although not limited to this. As in the case of the first embodiment, the encrypted authentication data generated by the client 100 is configured to be transmitted from the client 100 to the server 200 via the network 400.

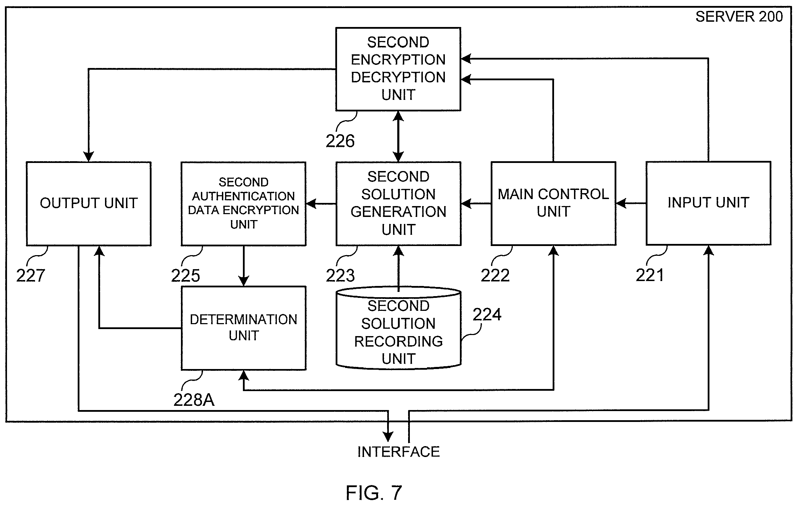

On the other hand, basically, the configuration of the server 200 may also be the same as that described in the above-described embodiment. However, the authentication unit 228 is replaced with a determination unit 228A (FIG. 7). Similar to the authentication unit 228, the determination unit 228A receives the encrypted authentication data sent from the client 100 from the main control unit 222, receives at least one encrypted authentication data generated by the second authentication data encryption unit 225 from the second authentication data encryption unit 225, and finds the encrypted authentication data from the latter that matches the former. Although the authentication unit 228 performs authentication as a result, the determination unit 228A does not perform authentication.

When the determination unit 228A can find at least one encrypted authentication data generated by the second authentication data encryption unit 225 that is the same as the encrypted authentication data sent from the client 100, as in the case of the first embodiment, it is possible to realize synchronization between the client 100 and the server 200, or between the first solution generation unit 123 and the second solution generation unit 223.

When it can be realized, the encrypted communication (S1006, 2006) may be performed between the client 100 and the server 200, as in the case of the first embodiment.

Note that, in Modification 4, the server 200 does not authenticate the client 100 by using encrypted authentication data. However, the server 200 may authenticate the client 100 by other methods. For example, in the case of the first embodiment, the identification information, which is the user ID, is transmitted from the client 100 to the server 200. However, the server 200 can authenticate the client 100 by using a known or well-known technology that uses the user ID and a password as the identification information, and uses them by the server 200 to authenticate the client 100.

<<Second Embodiment>>

A communication system in a second embodiment is explained. The communication system in the second embodiment is basically the same as the communication system in the first embodiment. As in the case of the first embodiment, the communication system in the second embodiment is configured to include a large number of clients 100 and the server 200, which is basically one server.

The configuration of the client 100 and processing performed in the client 100 in the second embodiment are the same as those in the first embodiment.

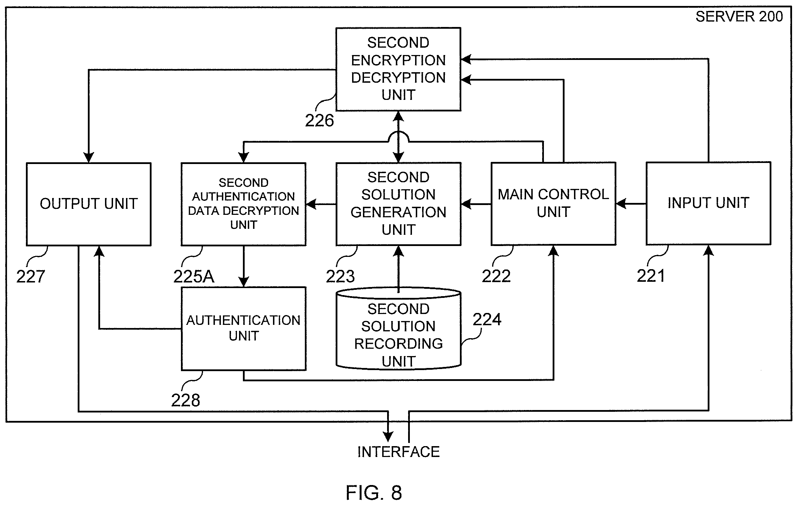

On the other hand, the server 200 in the second embodiment has, in most portions thereof, the same configuration as the configuration of the server 200 in the first embodiment. In particular, a hardware configuration of the server 200 in the second embodiment is the same as the configuration of the server 200 in the first embodiment. However, the server 200 in the second embodiment is different from the server 200 in the first embodiment in that a second authentication data decryption unit 225A is generated instead of the second authentication data encryption unit 225 inside the server 200 in the second embodiment (FIG. 8). A function of the second authentication data decryption unit 225A is different from the function of the second authentication data encryption unit 225 in the first embodiment. However, functions of functional blocks other than the second authentication data decryption unit 225A are the same as the functions in the case of the first embodiment except the main control unit 222 and the authentication unit 228. Since the second authentication data encryption unit 225 in the server 200 in the first embodiment is replaced with the second authentication data decryption unit 225A, a part of the processing performed in the server 200 in the second embodiment is changed from the processing performed in the server 200 in the first embodiment.

In the second embodiment, as in the case of the first embodiment, the main control unit 222 has a function of performing control of all the functional blocks generated in the server 200.

As in the case of the first embodiment, the main control unit 222 sometimes receives encrypted authentication data and data of identification information from the input unit 221. When receiving those data, the main control unit 222 in the first embodiment is configured to send the encrypted authentication data to the authentication unit 228. However, the main control unit 222 in the second embodiment is configured to send the encrypted authentication data to the second encryption decryption unit 226. When receiving the encrypted authentication data and the data of the identification information from the input unit 221, as in the case of the first embodiment, the main control unit 222 sends, in addition to the identification information, an instruction to generate a solution to the second solution generation unit 223.

The main control unit 222 in the second embodiment sometimes receives authentication data as in the case of the first embodiment. When receiving such authentication data, the main control unit 222 is configured to give, to the second encryption decryption unit 226, permission to decrypt encrypted data sent from the client 100 that sent encrypted authentication data, which triggers the authentication unit 228 to generate such authentication data. This is the same as the case in the first embodiment.

The second authentication data decryption unit 225A performs decryption of encrypted authentication data by using a solution. To enable the decryption, the second authentication data decryption unit 225A receives a solution from the second solution generation unit 223 and receives encrypted authentication data from the main control unit 222.

A method of decryption of encrypted authentication data performed by the second authentication data decryption unit 225A may be any method. However, the method is performed as a method capable of returning the encrypted authentication data to original authentication data as long as a solution is used for the decryption and encrypted authentication data generated by encrypting authentication data in the first authentication data encryption unit 125 of the client 100 is valid authentication data, for example, not being falsified. In that sense, processing of decryption performed by the second authentication data decryption unit 225A depends on processing performed by the first authentication data encryption unit 125. For example, if the encryption performed by the first authentication data encryption unit 125 is encryption of a common key system performed by using a certain algorithm and further using a solution as a key, the decryption performed by the second authentication data decryption unit 225A is decryption of the common key system performed by using the same algorithm and further by using a solution as a key. In this embodiment, the decryption is performed in that way, although not always being performed in that way.

When the authentication data, which is data obtained by decrypting the encrypted authentication data, is generated, the second authentication data decryption unit 225A is configured to send the authentication data to the authentication unit 228.

As in the case of the first embodiment, the server 200 needs to share the authentication data with the client 100. Although not limited to this, in this embodiment, the second authentication data decryption unit 225A is configured to generate authentication data every time the second authentication data decryption unit 225A performs the processing of the decryption of the authentication data and configured to send the generated authentication data to the authentication unit 228 together with the above-described authentication data obtained by decrypting the encrypted authentication data. Authentication data generated by the second authentication data decryption unit 225A and not obtained by decrypting the encrypted authentication data is used for performing processing of authentication in the authentication unit 228. Such authentication data only has to be present in the authentication unit 228 when the authentication unit 228 performs authentication. Therefore, the authentication data does not always need to be generated by the second authentication data decryption unit 225A. The main control unit 222, the authentication unit 228, and the like may generate the authentication data. In particular, when the authentication data is fixed authentication data that does not change over time, the authentication unit 228 may be configured to always retain the fixed authentication data.

As in the case of the first embodiment, the authentication unit 228 has a function of performing authentication of the client 100 that sent encrypted authentication data to the server 200. However, a method of the authentication is slightly different from the method performed by the authentication unit 228 in the first embodiment.

As described above, the authentication unit 228 is configured to receive, from the second authentication data decryption unit 225A, authentication data obtained by the second authentication data decryption unit 225A decrypting the encrypted authentication data and authentication data generated by the server 200 different from the authentication data. If these authentication data match each other, more accurately, any one of the former authentication data, which is sometimes a plurality of authentication data, and the latter authentication data match, the authentication unit 228 in the second embodiment is configured to authenticate the client 100 that sent the encrypted authentication data to the server 200 to be valid.

Processing in which the authentication unit 228 in the second embodiment performs authentication and processing in which the authentication unit 228 does not perform authentication are the same as those in the case of the first embodiment.

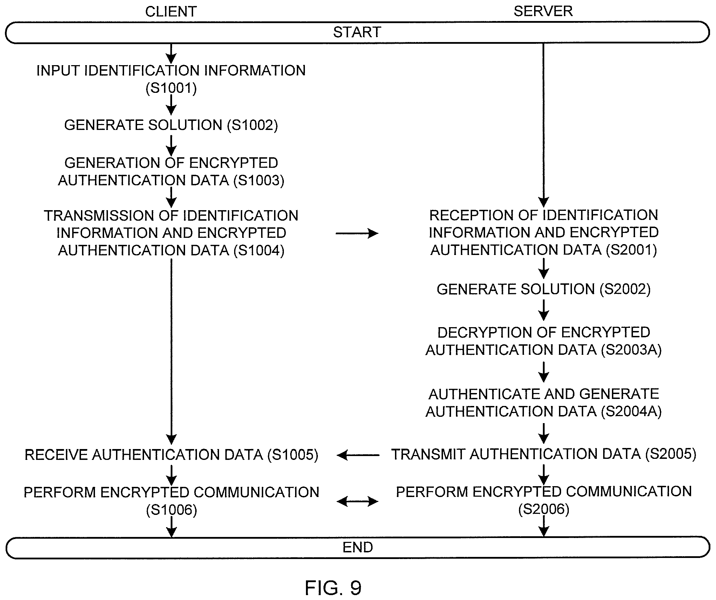

A method of using the communication system in the second embodiment and the operation of the communication system are described below with reference to FIG. 9.

The processing executed by the client 100 is the same as the processing in the first embodiment as described above.

First, a user about to use Internet banking operates the input device 102 of the client 100 carried by the user, starts a browser, and inputs a user ID, which is identification information, as in the case of the first embodiment (S1001).

The main control unit 122, which receives the identification information, sends the identification information to the output unit 127 and sends an instruction to generate a solution to the first solution generation unit 123. When receiving such an instruction, the first solution generation unit 123 generates a solution as in the case of the first embodiment (S1002).

When receiving the solution from the first solution generation unit 123, the first authentication data encryption unit 125 encrypts authentication data by using the received solution to generate encrypted authentication data (S1003).

The encrypted authentication data is sent from the client 100 to the server 200 via the network 400 together with the identification information (S1004).

The server 200 receives, with a transmission and reception mechanism of the server 200, the encrypted authentication data and data of the identification information sent from the client 100 (S2001). More in detail, the server 200 collectively and simultaneously receives, with the transmission and reception mechanism, the encrypted authentication data and the identification information sent from the client 100.

The encrypted authentication data and the data of the identification information are sent to an interface of the server 200 and sent from the interface to the input unit 221. When receiving the encrypted authentication data and the data of the identification information from the interface, the input unit 221 sends the encrypted authentication data and the data of the identification information to the main control unit 222.

When receiving the encrypted authentication data and the data of the identification information from the input unit 221, the main control unit 222 sends the encrypted authentication data and the data of the identification information to the second authentication data decryption unit 225A. On the other hand, when receiving the encrypted authentication data and the data of the identification information from the input unit 221, the main control unit 222 sends an instruction to generate a solution to the second solution generation unit 223 in addition to the identification information.

The second solution generation unit 223, which receives the instruction to generate a solution together with the identification information, generates a solution (S2002). A method of the second solution generation unit 223 in the second embodiment generating a solution and a method of using the identification information are the same as the methods in the first embodiment. In the second embodiment, as in the case of the first embodiment, two solutions are generated. The second solution generation unit 223 sends the generated solutions to the second authentication data decryption unit 225A.

When receiving the two solutions, the second authentication data decryption unit 225A decrypts the encrypted authentication data by using those two solutions to obtain authentication data (S2003A). More in detail, the second authentication data decryption unit 225A performs decryption in the common key system by using a predetermined algorithm and by using the two solutions respectively as keys. Consequently, two authentication data based on the encrypted authentication data sent from the client 100 are generated. That is, in this embodiment, two authentication data decrypted by different keys are generated from one encrypted authentication data.

On the other hand, the second authentication data decryption unit 225A generates authentication data, at a point in time when such decryption is performed, not based on the encrypted authentication data transmitted from the client 100.

The second authentication data decryption unit 225A sends, to the authentication unit 228, the two authentication data based on the encrypted authentication data transmitted from the client 100 and the authentication data not based on the encrypted authentication data transmitted from the client 100.

The authentication unit 228, which receives the authentication data, performs authentication (S2004A).

The authentication unit 228 compares the two authentication data based on the encrypted authentication data decrypted by the second authentication data decryption unit 225A and transmitted from the client 100 and the authentication data not based on the encrypted authentication data generated by the second authentication data decryption unit 225A and transmitted from the client 100. When one of the former authentication data and the latter authentication data match, the authentication unit 228 authenticates the client 100 that sent the encrypted authentication data to be valid. When both the former authentication data do not match the latter authentication data, the authentication unit 228 does not authenticate the client 100 that sent the encrypted authentication data to be valid.

When the authentication is performed, the authentication unit 228 generates authentication data, which is data indicating that the authentication is performed concerning the client 100, and sends the authentication data to the main control unit 222 and the output unit 227. When the authentication is not performed, the communication between the client 100 and the server 200 is terminated there. The user operates the client 100 to return to the processing of inputting the identification information, which is the user ID.

The following processing in the second embodiment, that is, processing of the transmission of the authentication data from the server 200 to the client 100 (S2005) and the execution of the encrypted communication by the client 100 and the server 200 (S1006 and S2006) is the same as the processing in the case of the first embodiment.

Note that, in the second embodiment as well, it is obvious that the modifications 1 to 3 in the first embodiment can be directly applied.

In the second embodiment as well, it is possible to apply the modification 4 in the first embodiment. In that case, the encrypted authentication data sent from the client 100 to the server 200 is used only for the purpose of synchronizing solutions in the client 100 and the server 200. However, in the case of the second embodiment as well, it is possible for the server 200 to authenticate the client 100 without using encrypted authentication data.

**Claims**

1. A transmission and reception system comprising:

   a transmission device comprising

   first solution recording means for recording an initial solution at least in an initial state, the initial solution being data used for generating a solution, the solution being a predetermined number of series of at least one of characters, numbers, and signs,
   first solution generation means for generating a new solution based on the initial solution recorded in the first solution recording means, the new solution becoming always the same when generated under the same condition,
   first authentication data encryption means for encrypting authentication data, the authentication data being predetermined data, into encrypted authentication data by using the solution generated by the first solution generation means, and
transmission means for transmitting the encrypted authentication data generated by the first authentication data encryption means via a network; and

a reception device comprising

reception means for receiving, via the network, the encrypted authentication data transmitted from the transmission device,
second solution recording means for recording the same initial solution as the initial solution recorded in the first solution recording means of the transmission device at least in an initial state,
second solution generation means for generating, based on the initial solution recorded in the second solution recording means, a new solution that is the same as the new solution generated by the first solution generation means of the transmission device, the new solution becoming always the same when using the same initial solution and generated under the same condition, and
second authentication data encryption means for encrypting the same authentication data as the authentication data predetermined between the reception device and the transmission device and used in the transmission device into encrypted authentication data by using the solution generated by the second solution generation means,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means, and
the reception device includes authentication means for authenticating the transmission device that sent the encrypted authentication data to be valid, when one of the encrypted authentication data generated by the second authentication data encryption means matches the encrypted authentication data transmitted from the transmission device.

2. A transmission and reception system comprising:

a transmission device comprising

first solution recording means for recording an initial solution at least in an initial state, the initial solution being data used for generating a solution, the solution being a predetermined number of series of at least one of characters, numbers, and signs,
first solution generation means for generating a new solution based on the initial solution recorded in the first solution recording means, the new solution becoming always the same when generated under the same condition,
first authentication data encryption means for encrypting authentication data, the authentication data being predetermined data, into encrypted authentication data by using the solution generated by the first solution generation means, and
transmission means for transmitting the encrypted authentication data generated by the first authentication data encryption means via a network; and

a reception device comprising

reception means for receiving, via the network, the encrypted authentication data transmitted from the transmission device,
second solution recording means for recording the same initial solution as the initial solution recorded in the first solution recording means of the transmission device at least in an initial state,
second solution generation means for generating, based on the initial solution recorded in the second solution recording means, a new solution that is the same as the new solution generated by the first solution generation means of the transmission device, the new solution becoming always the same when using the same initial solution and generated under the same condition, and
second authentication data decryption means for decrypting the encrypted authentication data received by the reception means to generate the authentication data by using the solution generated by the second solution generation means,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means, and

the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

3. The transmission and reception system according to claim 1 or 2,

wherein the transmission device includes first encryption decryption means capable of performing at least one of encryption processing and decryption processing,

the first encryption decryption means is configured to encrypt plaintext data to be transmitted, by using the solution generated by the first solution generation means after the authentication is performed by the reception device,, or to decrypt encrypted data transmitted from the reception device to convert the encrypted data into plaintext data, by using the solution generated by the first solution generation means after the authentication is performed by the reception device,,

the reception device includes second encryption decryption means capable of performing at least one of encryption processing and decryption processing,

the second encryption decryption means is configured to encrypt plaintext data to be transmitted, by using the same solution as the solution used by the first encryption decryption means among solutions generated by the second solution generation means after the authentication is performed by the reception device, or to decrypt encrypted data transmitted from the transmission device to convert the encrypted data into plaintext data, by using the same solution as the solution used by the first encryption decryption means among solutions generated by the second solution generation means after the authentication is performed by the reception device, and

the transmission device and the reception device are configured to perform at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

4. The transmission and reception system according to claim 1 or 2,

wherein a number of the transmission devices is plural, identification information for identifying each user from other users is assigned to a user who uses the transmission device, and the transmission device is configured to send the identification information to the reception device when the encrypted authentication data is sent from the transmission device to the reception device,

at least in an initial state, the same initial solution as the initial solution recorded in the first solution recording means of the transmission device to which the identification information is assigned is recorded in the second solution recording means in association with the identification information assigned to each transmission device, and

in a case where a new solution is generated by the second solution generation means when the reception means receives the encrypted authentication data transmitted from the transmission device, the second solution generation means is configured to generate a solution based on, among initial solutions recorded in the second solution recording means, the initial solution recorded in the second solution recording means in a state where the initial solution is associated with a solution corresponding to the identification information sent from the transmission device with the encrypted authentication data that becomes a trigger for generating the new solution.

5. The transmission and reception system according to claim 1 or 2, wherein authentication data used in the transmission device and authentication data used in the reception device change with elapse of time according to a rule between the transmission device and the reception device.

6. A transmission device constituting a transmission and reception system in combination with a reception device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition; and

second authentication data encryption means for encrypting the same authentication data as the authentication data predetermined between the reception device and the transmission device and used in the transmission device into encrypted authentication data by using the solution generated by the second solution generation means,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means, and

the reception device includes authentication means for authenticating the transmission device that sent the encrypted authentication data to be valid, when one of the encrypted authentication data generated by the second authentication data encryption means matches the encrypted authentication data transmitted from the transmission device.

7. A transmission device constituting a transmission and reception system in combination with a reception device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition; and

second authentication data decryption means for decrypting the encrypted authentication data received by the reception means to generate the authentication data by using the solution generated by the second solution generation means,

wherein the second solution generation means is configured to generate at least one solution when the reception means receives the encrypted authentication data transmitted from the transmission device, and the second authentication data decryption means is configured to decrypt one of the encrypted authentication data by using the at least one solution generated by the second solution generation means to generate at least one of the authentication data, and

the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

8. A reception device constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition; and

second authentication data encryption means for encrypting the same authentication data as the authentication data predetermined between the reception device and the transmission device and used in the transmission device into encrypted authentication data by using the solution generated by the second solution generation means,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means, and

the reception device includes authentication means for authenticating the transmission device that sent the encrypted authentication data to be valid, when one of the encrypted authentication data generated by the second authentication data encryption means matches the encrypted authentication data transmitted from the transmission device.

9. A reception device constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition; and

second authentication data decryption means for decrypting the encrypted authentication data received by the reception means to generate the authentication data by using the solution generated by the second solution generation means,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means, and

the reception device includes authentication means for authenticating the transmission device that sent the encrypted authentication data to be valid, when one of the authentication data generated by the second authentication data decryption means matches the same authentication data as the authentication data used in the transmission device.

10. A method performed in a computer of a transmission device, the transmission device including the computer and constituting a transmission and reception system in combination with a reception device, the transmission device comprising first solution recording means for recording an initial solution at least in an initial state, the initial solution being data used for generating a solution, the solution being a predetermined number of series of at least one of characters, numbers, and signs,

the method comprising the processes performed by the computer, the processes comprising:

a process of generating a new solution based on the initial solution recorded in the first solution recording means, the new solution becoming always the same when generated under the same condition;

a process of encrypting authentication data, the authentication data being predetermined data, into encrypted authentication data by using the generated solution; and

a process of transmitting the generated encrypted authentication data via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the computer of the transmission device, the new solution becoming always the same when using the same initial solution and generated under the same condition; and

second authentication data encryption means for encrypting the same authentication data as the authentication data predetermined between the reception device and the transmission device and used in the transmission device into encrypted authentication data by using the solution generated by the second solution generation means,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means, and

the reception device includes authentication means for authenticating the transmission device that sent the encrypted authentication data to be valid, when one of the encrypted authentication data generated by the second authentication data encryption means matches the encrypted authentication data transmitted from the transmission device.

11. A method performed in a computer of a transmission device, the transmission device including the computer and constituting a transmission and reception system in combination with a reception device,

the transmission device comprising first solution recording means for recording an initial solution at least in an initial state, the initial solution being data used for generating a solution, the solution being a predetermined number of series of at least one of characters, numbers, and signs,

the method comprising the processes performed by the computer, the processes comprising:

a process of generating a new solution based on the initial solution recorded in the first solution recording means, the new solution becoming always the same when generated under the same condition;

a process of encrypting authentication data, the authentication data being predetermined data, into encrypted authentication data by using the generated solution; and

a process of transmitting the generated encrypted authentication data via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the computer of the transmission device, the new solution becoming always the same when using the same initial solution and generated under the same condition; and

second authentication data decryption means for decrypting the encrypted authentication data received by the reception means to generate the authentication data by using the solution generated by the second solution generation means,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means, and

the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

12. A method performed in a computer of a reception device, the reception device including the computer and constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the computer comprising second solution recording means for recording the same initial solution as the initial solution recorded in the first solution recording means of the transmission device at least in an initial state,

the method comprising the processes performed by the computer, the processes comprising:

a process of receiving, via the network, the encrypted authentication data transmitted from the transmission device;

a process of generating, based on the initial solution recorded in the second solution recording means, a new solution that is the same as the new solution generated by the first solution generation means of the transmission device, the new solution becoming always the same when using the same initial solution and generated under the same condition; and

a process of encrypting the same authentication data as the authentication data predetermined between the reception device and the transmission device and used in the transmission device into encrypted authentication data by using the generated solution,

wherein the computer

performs the process of generating a new solution as a process of generating at least one solution when the reception device receives the encrypted authentication data transmitted from the transmission device,

performs the process of generating encrypted authentication data as a process of encrypting the same authentication data as the authentication data predetermined between the reception device and the transmission device and used in the transmission device into at least one encrypted authentication data by using the generated at least one solution, and

authenticates the transmission device that sent the encrypted authentication data to be valid, when one of the generated encrypted authentication data matches the encrypted authentication data transmitted from the transmission device.

13. A method performed in a computer of a reception device, the reception device including the computer and constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the computer comprising second solution recording means for recording the same initial solution as the initial solution recorded in the first solution recording means of the transmission device at least in an initial state,

the method comprising the processes performed by the computer, the processes comprising:

a process of receiving, via the network, the encrypted authentication data transmitted from the transmission device;

a process of generating, based on the initial solution recorded in the second solution recording means, a new solution that is the same as the new solution generated by the first solution generation means of the transmission device, the new solution becoming always the same when using the same initial solution and generated under the same condition; and

a process of decrypting the received encrypted authentication data to generate the authentication data by using the generated solution,

wherein the computer

performs the process of generating a new solution as a process of generating at least one solution when the reception device receives the encrypted authentication data transmitted from the transmission device,

performs the process of generating encrypted authentication data as a process of decrypting one of the encrypted authentication data by using the generated at least one solution to generate at least one of the authentication data, and

authenticates the transmission device that sent the encrypted authentication data to be valid, when one of the generated authentication data matches the same authentication data as the authentication data predetermined between the reception device and the transmission device and used in the transmission device.

14. A computer program for causing a computer to function as a transmission device constituting a transmission and reception system in combination with a reception device,
the computer program causing the computer to function as:

first solution recording means for recording an initial solution at least in an initial state, the initial solution being data used for generating a solution, the solution being a predetermined number of series of at least one of characters, numbers, and signs;
first solution generation means for generating a new solution based on the initial solution recorded in the first solution recording means, the new solution becoming always the same when generated under the same condition;
first authentication data encryption means for encrypting authentication data, the authentication data being predetermined data, into encrypted authentication data by using the solution generated by the first solution generation means; and
transmission means for transmitting the encrypted authentication data generated by the first authentication data encryption means via a network,
the reception device comprising:

reception means for receiving, via the network, the encrypted authentication data transmitted from the transmission device;
second solution recording means for recording the same initial solution as the initial solution recorded in the first solution recording means of the transmission device at least in an initial state;
second solution generation means for generating, based on the initial solution recorded in the second solution recording means, a new solution that is the same as the new solution generated by the first solution generation means of the transmission device, the new solution becoming always the same when using the same initial solution and generated under the same condition; and
second authentication data encryption means for encrypting the same authentication data as the authentication data predetermined between the reception device and the transmission device and used in the transmission device into encrypted authentication data by using the solution generated by the second solution generation means,
wherein the second solution generation means is configured to generate at least one solution when the reception means receives the encrypted authentication data transmitted from the transmission device, and
the second authentication data encryption means is configured to generate at least one of the encrypted authentication data from one of the authentication data by using the at least one solution generated by the second solution generation means, and
the reception device includes authentication means for authenticating the transmission device that sent the encrypted authentication data to be valid, when one of the encrypted authentication data generated by the second authentication data encryption means matches the encrypted authentication data transmitted from the transmission device.

15. A computer program for causing a computer to function as a transmission device constituting a transmission and reception system in combination with a reception device,
the computer program causing the computer to function as:

first solution recording means for recording an initial solution at least in an initial state, the initial solution being data used for generating a solution, the solution being a predetermined number of series of at least one of characters, numbers, and signs;
first solution generation means for generating a new solution based on the initial solution recorded in the first solution recording means, the new solution becoming always the same when generated under the same condition;
first authentication data encryption means for encrypting authentication data, the authentication data being predetermined data, into encrypted authentication data by using the solution generated by the first solution generation means; and
transmission means for transmitting the encrypted authentication data generated by the first authentication data encryption means via a network,
the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition; and

second authentication data decryption means for decrypting the encrypted authentication data received by the reception means to generate the authentication data by using the solution generated by the second solution generation means,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means, and

the reception device includes authentication means for authenticating the transmission device that sent the encrypted authentication data to be valid, when one of the authentication data generated by the second authentication data decryption means matches the same authentication data as the authentication data predetermined between the reception device and the transmission device and used in the transmission device.

16. A computer program for causing a computer to function as a reception device constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the computer program causing the computer to function as:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data encryption means for encrypting the same authentication data as the authentication data predetermined between the reception device and the transmission device and used in the transmission device into encrypted authentication data by using the solution generated by the second solution generation means; and

authentication means,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means, and

the authentication means authenticates the transmission device that sent the encrypted authentication data to be valid, when one of the encrypted authentication data generated by the second authentication data encryption means matches the encrypted authentication data transmitted from the transmission device.

**17.** A computer program for causing a computer to function as a reception device constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means; and

transmission means for transmitting the encrypted authentication data generated by the first authentication data encryption means via a network,

the computer program causing the computer to function as:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data decryption means for decrypting the encrypted authentication data received by the reception means to generate the authentication data by using the solution generated by the second solution generation means; and

authentication means,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means, and

the authentication means authenticates the transmission device that sent the encrypted authentication data to be valid, when one of the authentication data generated by the second authentication data decryption means matches the same authentication data as the authentication data predetermined between the reception device and the transmission device and used in the transmission device.

**18.** A transmission and reception system comprising:

a transmission device comprising

first solution recording means for recording an initial solution at least in an initial state, the initial solution being data used for generating a solution, the solution being a predetermined number of series of at least one of characters, numbers, and signs,

first solution generation means for generating a new solution based on the initial solution recorded in the first solution recording means, the new solution becoming always the same when generated under the same condition,

first authentication data encryption means for encrypting authentication data, the authentication data being predetermined data, into encrypted authentication data by using the solution generated by the first solution generation means,

transmission means for transmitting the encrypted authentication data generated by the first authentication data encryption means via a network, and

first encryption decryption means capable of performing at least one of encryption processing and decryption processing; and

a reception device comprising

reception means for receiving, via the network, the encrypted authentication data transmitted from the transmission device,

second solution recording means for recording the same initial solution as the initial solution recorded in the first solution recording means of the transmission device at least in an initial state,

second solution generation means for generating, based on the initial solution recorded in the second solution recording means, a new solution that is the same as the new solution generated by the first solution generation means of the transmission device, the new solution becoming always the same when using the same initial solution and generated under the same condition,

second authentication data encryption means for encrypting the same authentication data as the authentication data predetermined between the reception device and the transmission device and used in the transmission device into encrypted authentication data by using the solution generated by the second solution generation means,

determination means for determining whether or not one of the encrypted authentication data generated by the second authentication data encryption means matches the encrypted authentication data transmitted from the transmission device, and

second encryption decryption means capable of performing at least one of encryption processing and decryption processing,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the encrypted authentication data generated by the second authentication data encryption means matches the encrypted authentication data transmitted from the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

**19.** A transmission and reception system comprising:

a transmission device comprising

first solution recording means for recording an initial solution at least in an initial state, the initial solution being data used for generating a solution, the solution being a predetermined number of series of at least one of characters, numbers, and signs,

first solution generation means for generating a new solution based on the initial solution recorded in the first solution recording means, the new solution becoming always the same when generated under the same condition,

first authentication data encryption means for encrypting authentication data, the authentication data being predetermined data, into encrypted authentication data by using the solution generated by the first solution generation means,

transmission means for transmitting the encrypted authentication data generated by the first authentication data encryption means via a network, and

first encryption decryption means capable of performing at least one of encryption processing and decryption processing; and

a reception device comprising

reception means for receiving, via the network, the encrypted authentication data transmitted from the transmission device,

second solution recording means for recording the same initial solution as the initial solution recorded in the first solution recording means of the transmission device at least in an initial state,

second solution generation means for generating, based on the initial solution recorded in the second solution recording means, a new solution that is the same as the new solution generated by the first solution generation means of the transmission device, the new solution becoming always the same when using the same initial solution and generated under the same condition,

second authentication data decryption means for decrypting the encrypted authentication data received by the reception means to generate the authentication data by using the solution generated by the second solution generation means,

determination means for determining whether or not one of the authentication data generated by the second authentication data decryption means matches the same authentication data as the authentication data predetermined between the reception device and the transmission device and used in the transmission device, and

second encryption decryption means capable of performing at least one of encryption processing and decryption processing,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the authentication data generated by the second authentication data decryption means matches the same authentication data as the authentication data predetermined between the reception device and the transmission device and used in the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

20. A transmission device constituting a transmission and reception system in combination with a reception device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means;

transmission means for transmitting the encrypted authentication data generated by the first authentication data encryption means via a network; and

first encryption decryption means capable of performing at least one of encryption processing and decryption processing,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data encryption means for encrypting the same authentication data as the authentication data predetermined between the reception device and the transmission device and used in the transmission device into encrypted authentication data by using the solution generated by the second solution generation means;

determination means for determining whether or not one of the encrypted authentication data generated by the second authentication data encryption means matches the encrypted authentication data transmitted from the transmission device; and

second encryption decryption means capable of performing at least one of encryption processing and decryption processing,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the encrypted authentication data generated by the second authentication data encryption means matches the encrypted authentication data transmitted from the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

21. A transmission device constituting a transmission and reception system in combination with a reception device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means;

transmission means for transmitting the encrypted authentication data generated by the first authentication data encryption means via a network; and

first encryption decryption means capable of performing at least one of encryption processing and decryption processing,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data decryption means for decrypting the encrypted authentication data received by the reception means to generate the authentication data by using the solution generated by the second solution generation means;

determination means for determining whether or not one of the authentication data generated by the second authentication data decryption means matches the same authentication data as the authentication data predetermined between the reception device and the transmission device and used in the transmission device; and

second encryption decryption means capable of performing at least one of encryption processing and decryption processing,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the authentication data generated by the second authentication data decryption means matches the same authentication data as the authentication data predetermined between the reception device and the transmission device and used in the transmission device, at least one of:

> processing of transmitting encrypted data encrypted by the first encryption decryption means from the transmission device to the reception device and decrypting the encrypted data by the second encryption decryption means; and
>
> processing of transmitting encrypted data encrypted by the second encryption decryption means from the reception device to the transmission device and decrypting the encrypted data by the first encryption decryption means.

22. A reception device constituting a transmission and reception system in combination with a transmission device, the transmission device comprising:

> first solution recording means for recording an initial solution at least in an initial state, the initial solution being data used for generating a solution, the solution being a predetermined number of series of at least one of characters, numbers, and signs;
>
> first solution generation means for generating a new solution based on the initial solution recorded in the first solution recording means, the new solution becoming always the same when generated under the same condition;
>
> first authentication data encryption means for encrypting authentication data, the authentication data being predetermined data, into encrypted authentication data by using the solution generated by the first solution generation means;
>
> transmission means for transmitting the encrypted authentication data generated by the first authentication data encryption means via a network; and
>
> first encryption decryption means capable of performing at least one of encryption processing and decryption processing,
>
> the reception device comprising:

>> reception means for receiving, via the network, the encrypted authentication data transmitted from the transmission device;
>>
>> second solution recording means for recording the same initial solution as the initial solution recorded in the first solution recording means of the transmission device at least in an initial state;
>>
>> second solution generation means for generating, based on the initial solution recorded in the second solution recording means, a new solution that is the same as the new solution generated by the first solution generation means of the transmission device, the new solution becoming always the same when using the same initial solution and generated under the same condition;
>>
>> second authentication data encryption means for encrypting the same authentication data as the authentication data predetermined between the reception device and the transmission device and used in the transmission device into encrypted authentication data by using the solution generated by the second solution generation means;
>>
>> determination means for determining whether or not one of the encrypted authentication data generated by the second authentication data encryption means matches the encrypted authentication data transmitted from the transmission device; and
>>
>> second encryption decryption means capable of performing at least one of encryption processing and decryption processing,
>>
>> wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means,
>>
>> the first solution generation means is configured to generate a new solution, after the solution used for generating the encrypted authentication data transmitted to the reception device,
>>
>> the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device,
the first encryption decryption means is configured to encrypt plaintext data to be transmitted, or to decrypt encrypted data transmitted from the reception device to convert the encrypted data into plaintext data, by using the solution generated by the first solution generation means,
the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and
the transmission device and the reception device are configured to perform, after the determination means determines that one of the encrypted authentication data generated by the second authentication data encryption means matches the encrypted authentication data transmitted from the transmission device, at least one of:

processing of transmitting encrypted data encrypted by the first encryption decryption means from the transmission device to the reception device and decrypting the encrypted data by the second encryption decryption means; and
processing of transmitting encrypted data encrypted by the second encryption decryption means from the reception device to the transmission device and decrypting the encrypted data by the first encryption decryption means.

**23.** A reception device constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;
first solution generation means for generating a new solution based on the initial solution recorded in the first solution recording means, the new solution becoming always the same when generated under the same condition;
first authentication data encryption means for encrypting authentication data, the authentication data being predetermined data, into encrypted authentication data by using the solution generated by the first solution generation means;
transmission means for transmitting the encrypted authentication data generated by the first authentication data encryption means via a network; and
first encryption decryption means capable of performing at least one of encryption processing and decryption processing,
the reception device comprising:

reception means for receiving, via the network, the encrypted authentication data transmitted from the transmission device;
second solution recording means for recording the same initial solution as the initial solution recorded in the first solution recording means of the transmission device at least in an initial state;
second solution generation means for generating, based on the initial solution recorded in the second solution recording means, a new solution that is the same as the new solution generated by the first solution generation means of the transmission device, the new solution becoming always the same when using the same initial solution and generated under the same condition;
second authentication data decryption means for decrypting the encrypted authentication data received by the reception means to generate the authentication data by using the solution generated by the second solution generation means;
determination means for determining whether or not one of the authentication data generated by the second authentication data decryption means matches the same authentication data as the authentication data predetermined between the reception device and the transmission device and used in the transmission device; and
second encryption decryption means capable of performing at least one of encryption processing and decryption processing,
wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the authentication data generated by the second authentication data decryption means matches the same authentication data as the authentication data predetermined between the reception device and the transmission device and used in the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

24. A method performed in a computer of a transmission device, the transmission device including the computer and constituting a transmission and reception system in combination with a reception device, the transmission device comprising first solution recording means for recording an initial solution at least in an initial state, the initial solution being data used for generating a solution, the solution being a predetermined number of series of at least one of characters, numbers, and signs,

the method comprising the processes to be performed by the computer, the processes comprising:

a process of generating a new solution based on the initial solution recorded in the first solution recording means, the new solution becoming always the same when generated under the same condition;

a process of encrypting authentication data, the authentication data being predetermined data, into encrypted authentication data by using the generated solution; and

a process of transmitting the generated encrypted authentication data via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the computer of the transmission device, the new solution becoming always the same when using the same initial solution and generated under the same condition;

second authentication data encryption means for encrypting the same authentication data as the authentication data predetermined between the reception device and the transmission device and used in the transmission device into encrypted authentication data by using the solution generated by the second solution generation means;

determination means for determining whether or not one of the encrypted authentication data generated by the second authentication data encryption means matches the encrypted authentication data transmitted from the transmission device; and

second encryption decryption means capable of performing at least one of encryption processing and decryption processing,

the method further comprising the processes performed by the computer, the processes comprising:

a process of generating a new solution, after the solution used for generating the encrypted authentication data transmitted to the reception device; and

a process of encrypting plaintext data to be transmitted, or decrypting encrypted data transmitted from the reception device to convert the encrypted data into plaintext data, by using the generated solution, wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means,

the second solution generation means is configured to generate a solution under the same condition as the condition under which the computer of the transmission device generates the solution, after the solution generated by the second solution generation means and used for encrypting the encrypted authentication data that matches the encrypted authentication data transmitted from the transmission device,

the second encryption decryption means is configured to encrypt plaintext data to be transmitted, or to decrypt encrypted data transmitted from the transmission device to convert the encrypted data into plaintext data, by using the same solution as the solution used by the computer of the transmission device among solutions generated by the second solution generation means, and

the transmission device and the reception device are configured to perform, after the determination means determines that one of the encrypted authentication data generated by the second authentication data encryption means matches the encrypted authentication data transmitted from the transmission device, at least one of:

processing of transmitting encrypted data encrypted by the computer of the transmission device from the transmission device to the reception device and decrypting the encrypted data by the second encryption decryption means; and

processing of transmitting encrypted data encrypted by the second encryption decryption means from the reception device to the transmission device and decrypting the encrypted data by the computer of the transmission device.

25. A method performed in a computer of a transmission device, the transmission device including the computer and constituting a transmission and reception system in combination with a reception device, the transmission device comprising first solution recording means for recording an initial solution at least in an initial state, the initial solution being data used for generating a solution, the solution being a predetermined number of series of at least one of characters, numbers, and signs,

the method comprising the processes to be performed by the computer, the processes comprising:

a process of generating a new solution based on the initial solution recorded in the first solution recording means, the new solution becoming always the same when generated under the same condition;

a process of encrypting authentication data, the authentication data being predetermined data, into encrypted authentication data by using the generated solution; and

a process of transmitting the generated encrypted authentication data via a network,

the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the computer of the transmission device, the new solution becoming always the same when using the same initial solution and generated under the same condition;

second authentication data decryption means for decrypting the encrypted authentication data received by the reception means to generate the authentication data by using the solution generated by the second solution generation means;

determination means for determining whether or not one of the authentication data generated by the second authentication data decryption means matches the same authentication data as the authentication data predetermined between the reception device and the transmission device and used in the transmission device; and

second encryption decryption means capable of performing at least one of encryption processing and decryption processing,

the method further comprising the processes performed by the computer, the processes comprising:

a process of generating a new solution, after the solution used for generating the encrypted authentication data transmitted to the reception device; and

a process of encrypting plaintext data to be transmitted, or decrypting encrypted data transmitted from the reception device to convert the encrypted data into plaintext data, by using the solution generated by the computer of the transmission device,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means,

the second solution generation means is configured to generate a solution under the same condition as the condition under which the computer of the transmission device generates the solution, after the solution used for decrypting the authentication data that matches the same authentication data as the authentication data predetermined between the reception device and the transmission device and used in the transmission device and that is generated by the second authentication data decryption means,

the second encryption decryption means is configured to encrypt plaintext data to be transmitted, or to decrypt encrypted data transmitted from the transmission device to convert the encrypted data into plaintext data, by using the same solution as the solution used by the computer of the transmission device among solutions generated by the second solution generation means, and

the transmission device and the reception device are configured to perform, after the determination means determines that one of the authentication data generated by the second authentication data decryption means matches the same authentication data as the authentication data predetermined between the reception device and the transmission device and used in the transmission device, at least one of:

processing of transmitting encrypted data encrypted by the computer of the transmission device from the transmission device to the reception device and decrypting the encrypted data by the second encryption decryption means; and

processing of transmitting encrypted data encrypted by the second encryption decryption means from the reception device to the transmission device and decrypting the encrypted data by the computer of the transmission device.

26. A method performed in a computer of a reception device, the reception device including the computer and constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means;

first encryption decryption means capable of performing at least one of encryption processing and decryption processing; and

transmission means for transmitting the encrypted authentication data generated by the first authentication data encryption means via a network,

the first encryption decryption means being configured to encrypt plaintext data to be transmitted, or to decrypt encrypted data transmitted from the reception device to convert the encrypted data into plaintext data, by using the solution generated by the first solution generation means,

the computer comprising second solution recording means for recording the same initial solution as the initial solution recorded in the first solution recording means of the transmission device at least in an initial state,

the method comprising the processes performed by the computer, the processes comprising:

a process of receiving, via the network, the encrypted authentication data transmitted from the transmission device;

a process of generating, based on the initial solution recorded in the second solution recording means, a new solution that is the same as the new solution generated by the first solution generation means of the transmission device, the new solution becoming always the same when using the same initial solution and generated under the same condition;

a process of encrypting the same authentication data as the authentication data predetermined between the reception device and the transmission device and used in the transmission device into encrypted authentication data by using the generated solution;

a process of determining whether or not one of the generated encrypted authentication data matches the encrypted authentication data transmitted from the transmission device;

a process of generating a solution under the same condition as the condition under which the first solution generation means generates the solution, after the solution used for encrypting the encrypted authentication data that matches the encrypted authentication data transmitted from the transmission device and that is generated by the computer; and

a process of encrypting plaintext data to be transmitted, or to decrypt encrypted data transmitted from the transmission device to convert the encrypted data into plaintext data, by using the same solution as the solution used by the first encryption decryption means among solutions generated anew,

wherein the first solution generation means is configured to generate a new solution, after the solution used for generating the encrypted authentication data transmitted to the reception device, and

the transmission device and the reception device are configured to perform, after the computer of the reception device determines that one of the encrypted authentication data generated by the computer of the reception device matches the encrypted authentication data transmitted from the transmission device, at least one of:

processing of transmitting encrypted data encrypted by the first encryption decryption means from the transmission device to the reception device and decrypting the encrypted data by the computer of the reception device; and

processing of transmitting encrypted data encrypted by the computer of the reception device from the reception device to the transmission device and decrypting the encrypted data by the first encryption decryption means.

27. A method performed in a computer of a reception device, the reception device including the computer and constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means;

first encryption decryption means capable of performing at least one of encryption processing and decryption processing; and

transmission means for transmitting the encrypted authentication data generated by the first authentication data encryption means via a network,

the first encryption decryption means being configured to encrypt plaintext data to be transmitted, or to decrypt encrypted data transmitted from the reception device to convert the encrypted data into plaintext data, by using the solution generated by the first solution generation means,

the computer comprising second solution recording means for recording the same initial solution as the initial solution recorded in the first solution recording means of the transmission device at least in an initial state, the method comprising the processes performed by the computer, the processes comprising:

a process of receiving, via the network, the encrypted authentication data transmitted from the transmission device;

a process of generating, based on the initial solution recorded in the second solution recording means, a new solution that is the same as the new solution generated by the first solution generation means of the transmission device, the new solution becoming always the same when using the same initial solution and generated under the same condition;

a process of decrypting the encrypted authentication data received by the reception means to generate the authentication data by using the generated solution;

a process of determining whether or not one of the generated authentication data matches the same authentication data as the authentication data predetermined between the reception device and the transmission device and used in the transmission device;

a process of generating a solution under the same condition as the condition under which the first solution generation means generates the solution, after the solution used for decrypting the authentication data that matches the authentication data predetermined between the reception device and the transmission device and used in the transmission device and that is generated by the computer; and

a process of encrypting plaintext data to be transmitted, or to decrypt encrypted data transmitted from the transmission device to convert the encrypted data into plaintext data, by using the same solution as the solution used by the first encryption decryption means among solutions generated anew,

wherein the first solution generation means is configured to generate a new solution, after the solution used for generating the encrypted authentication data transmitted to the reception device, and

the transmission device and the reception device are configured to perform, after the computer of the reception device determines that one of the authentication data generated by the computer of the reception device matches the same authentication data as the authentication data predetermined between the reception device and the transmission device and used in the transmission device, at least one of:

processing of transmitting encrypted data encrypted by the first encryption decryption means from the transmission device to the reception device and decrypting the encrypted data by the computer of the reception device; and

processing of transmitting encrypted data encrypted by the computer of the reception device from the reception device to the transmission device and decrypting the encrypted data by the first encryption decryption means.

28. A computer program for causing a computer to function as a transmission device constituting a transmission and reception system in combination with a reception device,
the computer program being for causing the computer to function as:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means;

transmission means for transmitting the encrypted authentication data generated by the first authentication data encryption means via a network; and

first encryption decryption means capable of performing at least one of encryption processing and decryption processing,
the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data encryption means for encrypting the same authentication data as the authentication data predetermined between the reception device and the transmission device and used in the transmission device into encrypted authentication data by using the solution generated by the second solution generation means;

determination means for determining whether or not one of the encrypted authentication data generated by the second authentication data encryption means matches the encrypted authentication data transmitted from the transmission device; and

second encryption decryption means capable of performing at least one of encryption processing and decryption processing,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the encrypted authentication data generated by the second authentication data encryption means matches the encrypted authentication data transmitted from the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

29. A computer program for causing a computer to function as a transmission device constituting a transmission and reception system in combination with a reception device,
   the computer program being for causing the computer to function as:

   first solution recording means for recording an initial solution at least in an initial state, the initial solution being data used for generating a solution, the solution being a predetermined number of series of at least one of characters, numbers, and signs;

   first solution generation means for generating a new solution based on the initial solution recorded in the first solution recording means, the new solution becoming always the same when generated under the same condition;

   first authentication data encryption means for encrypting authentication data, the authentication data being predetermined data, into encrypted authentication data by using the solution generated by the first solution generation means;

   transmission means for transmitting the encrypted authentication data generated by the first authentication data encryption means via a network; and
first encryption decryption means capable of performing at least one of encryption processing and decryption processing,
the reception device comprising:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data decryption means for decrypting the encrypted authentication data received by the reception means to generate the authentication data by using the solution generated by the second solution generation means;

determination means for determining whether or not one of the authentication data generated by the second authentication data decryption means matches the same authentication data as the authentication data predetermined between the reception device and the transmission device and used in the transmission device, and

second encryption decryption means capable of performing at least one of encryption processing and decryption processing,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the authentication data generated by the second authentication data decryption means matches the same authentication data as the authentication data predetermined between the reception device and the transmission device and used in the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

30. A computer program for causing a computer to function as a reception device constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means;

transmission means for transmitting the encrypted authentication data generated by the first authentication data encryption means via a network; and

first encryption decryption means capable of performing at least one of encryption processing and decryption processing,

the computer program being for causing the computer to function as:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data encryption means for encrypting the same authentication data as the authentication data predetermined between the reception device and the transmission device and used in the transmission device into encrypted authentication data by using the solution generated by the second solution generation means;

determination means for determining whether or not one of the encrypted authentication data generated by the second authentication data encryption means matches the encrypted authentication data transmitted from the transmission device; and

second encryption decryption means capable of performing at least one of encryption processing and decryption processing,

wherein the second solution generation means is configured to generate at least one solution when the reception means receives the encrypted authentication data transmitted from the transmission device, and the second authentication data encryption means is configured to generate at least one of the encrypted authentication data from one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution generated by the second solution generation means and used for encrypting the encrypted authentication data that matches the encrypted authentication data transmitted from the transmission device,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the encrypted authentication data generated by the second authentication data encryption means matches the encrypted authentication data transmitted from the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

31. A computer program for causing a computer to function as a reception device constituting a transmission and reception system in combination with a transmission device, the transmission device comprising:

first solution recording means for recording an initial solution at least in an initial state, the initial solution being data used for generating a solution, the solution being a predetermined number of series of at least one of characters, numbers, and signs;

first solution generation means for generating a new solution based on the initial solution recorded in the first solution recording means, the new solution becoming always the same when generated under the same condition;

first authentication data encryption means for encrypting authentication data, the authentication data being predetermined data, into encrypted authentication data by using the solution generated by the first solution generation means;

transmission means for transmitting the encrypted authentication data generated by the first authentication data encryption means via a network; and

first encryption decryption means capable of performing at least one of encryption processing and decryption processing,

the computer program being for causing the computer to function as:

reception means for receiving, via the network, the encrypted authentication data transmitted from the transmission device;

second solution recording means for recording the same initial solution as the initial solution recorded in the first solution recording means of the transmission device at least in an initial state;

second solution generation means for generating, based on the initial solution recorded in the second solution recording means, a new solution that is the same as the new solution generated by the first solution generation means of the transmission device, the new solution becoming always the same when using the same initial solution and generated under the same condition;

second authentication data decryption means for decrypting the encrypted authentication data received by the reception means to generate the authentication data by using the solution generated by the second solution generation means;

determination means for determining whether or not one of the authentication data generated by the second authentication data decryption means matches the same authentication data as the authentication data predetermined between the reception device and the transmission device and used in the transmission device, and

second encryption decryption means capable of performing at least one of encryption processing and decryption processing,

wherein the second solution generation means is configured to generate at least one solution when the reception means receives the encrypted authentication data transmitted from the transmission device, and the second authentication data decryption means is configured to decrypt one of the encrypted authentication data to generate at least one of the authentication data by using the at least one solution generated by the second solution generation means,

the first solution generation means is configured to generate a new solution, after the solution used for generating the encrypted authentication data transmitted to the reception device,

the second solution generation means is configured to generate a solution under the same condition as the condition under which the first solution generation means generates the solution, after the solution used for decrypting the authentication data that matches the same authentication data as the authentication data predetermined between the reception device and the transmission device and used in the transmission device and that is generated by the second authentication data decryption means,

the first encryption decryption means is configured to encrypt plaintext data to be transmitted, or to decrypt encrypted data transmitted from the reception device to convert the encrypted data into plaintext data, by using the solution generated by the first solution generation means,

the second encryption decryption means is configured to encrypt plaintext data to be transmitted, or to decrypt encrypted data transmitted from the transmission device to convert the encrypted data into plaintext data, by using the same solution as the solution used by the first encryption decryption means among solutions generated by the second solution generation means, and

the transmission device and the reception device are configured to perform, after the determination means determines that one of the authentication data generated by the second authentication data decryption means matches the same authentication data as the authentication data predetermined between the reception device and the transmission device and used in the transmission device, at least one of:

processing of transmitting encrypted data encrypted by the first encryption decryption means from the transmission device to the reception device and decrypting the encrypted data by the second encryption decryption means; and

processing of transmitting encrypted data encrypted by the second encryption decryption means from the reception device to the transmission device and decrypting the encrypted data by the first encryption decryption means.

FIG. 1

100

101

102

FIG. 2

111    112    113

CPU    ROM    RAM

116

INTERFACE

114

FIG. 3

FIG. 4

SERVER 200

INPUT UNIT — 221

MAIN CONTROL UNIT — 222

SECOND ENCRYPTION DECRYPTION UNIT — 226

SECOND SOLUTION GENERATION UNIT — 223

SECOND SOLUTION RECORDING UNIT — 224

SECOND AUTHENTICATION DATA ENCRYPTION UNIT — 225

AUTHENTICATION UNIT — 228

OUTPUT UNIT — 227

INTERFACE

FIG. 5

CLIENT                                                    SERVER

START

INPUT IDENTIFICATION INFORMATION
(S1001)

GENERATE SOLUTION (S1002)

GENERATION OF ENCRYPTED
AUTHENTICATION DATA (S1003)

TRANSMISSION OF IDENTIFICATION          RECEPTION OF IDENTIFICATION
INFORMATION AND ENCRYPTED               INFORMATION AND ENCRYPTED
AUTHENTICATION DATA (S1004)             AUTHENTICATION DATA (S2001)

                                        GENERATE SOLUTION (S2002)

                                        GENERATION OF ENCRYPTED
                                        AUTHENTICATION DATA (S2003)

                                        AUTHENTICATE AND GENERATE
                                        AUTHENTICATION DATA (S2004)

RECEIVE AUTHENTICATION DATA (S1005)  ◄── TRANSMIT AUTHENTICATION DATA (S2005)

PERFORM ENCRYPTED COMMUNICATION   ◄──►   PERFORM ENCRYPTED COMMUNICATION
(S1006)                                  (S2006)

END

FIG. 6

EP 3 534 566 A2

FIG. 7

FIG. 8

START

INPUT IDENTIFICATION INFORMATION
(S1001)

GENERATE SOLUTION (S1002)

GENERATION OF ENCRYPTED
AUTHENTICATION DATA (S1003)

TRANSMISSION OF IDENTIFICATION
INFORMATION AND ENCRYPTED
AUTHENTICATION DATA (S1004)      ⟶      RECEPTION OF IDENTIFICATION
                                        INFORMATION AND ENCRYPTED
                                        AUTHENTICATION DATA (S2001)

                                        GENERATE SOLUTION (S2002)

                                        DECRYPTION OF ENCRYPTED
                                        AUTHENTICATION DATA (S2003A)

                                        AUTHENTICATE AND GENERATE
                                        AUTHENTICATION DATA (S2004A)

RECEIVE AUTHENTICATION DATA (S1005)  ⟵  TRANSMIT AUTHENTICATION DATA (S2005)

PERFORM ENCRYPTED COMMUNICATION  ⟷  PERFORM ENCRYPTED COMMUNICATION
(S1006)                                (S2006)

END

FIG. 9

EP 3 534 566 A2